(19) Europäisches Patentamt / European Patent Office / Office européen des brevets

(11) **EP 1 589 685 B1**

(12) **FASCICULE DE BREVET EUROPEEN**

(45) Date de publication et mention
de la délivrance du brevet:
**10.09.2008 Bulletin 2008/37**

(51) Int Cl.:
**H04L 1/06** (2006.01)  **H04B 7/04** (2006.01)

(21) Numéro de dépôt: **04291039.8**

(22) Date de dépôt: **22.04.2004**

(54) **Egalisation chip et détection multiutilisateur disjointes iteratives pour systèmes de communications CDMA sur canal MIMO**

Iterative Chipentzerrung und Mehrbenutzerdetektion in CDMA Kommunikationssystemen durch MIMO Kanal

Iterative chip equalization and multiuser detection for CDMA communications systems on MIMO channels

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**26.10.2005 Bulletin 2005/43**

(73) Titulaire: **FRANCE TELECOM**
**75015 Paris (FR)**

(72) Inventeurs:
• **Visoz, Raphaël**
**92130 Issy Les Moulineaux (FR)**
• **Berthet, Antoine**
**92290 Chatenay Malabry (FR)**

(74) Mandataire: **Joly, Jean-Jacques et al**
**Cabinet Beau de Loménie**
**158, Rue de l'Université**
**75340 Paris Cedex 07 (FR)**

(56) Documents cités:
WO-A-01/19013          FR-A- 2 810 175
FR-A- 2 841 068

• BERTHET A O ET AL: "ITERATIVE DECODING OF SERIALLY CONCATENATED MULTILAYERED TRELLIS-CODED MODULATIONS IN THE PRESENCE OF INTERSYMBOL INTERFERENCE AND NOISE" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 2 OF 6, 25 novembre 2001 (2001-11-25), pages 1042-1047, XP001099264 ISBN: 0-7803-7206-9

## Description

## DOMAINE TECHNIQUE GENERAL

La présente invention est relative au domaine des communications numériques. Elle concerne la manière de décoder efficacement des données numériques transmises sur un canal MIMO sélectif en fréquence en optimisant le compromis performance / complexité.

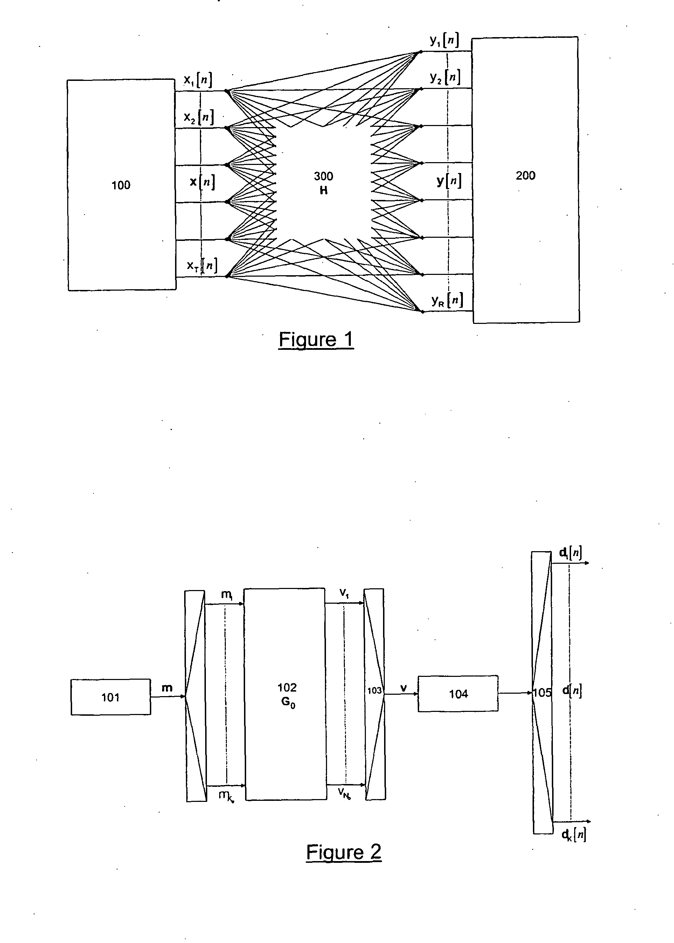

En référence à la figure 1, est illustré un procédé général de transmission sur canal 300 MIMO sélectif en fréquence, entre un émetteur 100 à antennes d'émission multiples (au nombre de T), délivrant des signaux x[$n$] à l'instant $n$, et un récepteur 200 à antennes de réception multiples (au nombre de R), recevant des signaux y[$n$] à l'instant $n$.

## PRESENTATION GENERALE DE L'ART ANTERIEUR

Tout système de communication gérant l'accès d'utilisateurs multiples sur un même canal par l'attribution de codes d'étalement spécifiques (CDMA), est limité en capacité par l'interférence entre utilisateurs (notée MUI). Dans le cadre de cette invention, on envisage une transmission sur un canal susceptible d'engendrer d'autres sources d'interférences comme l'interférence spatiale issue d'antennes multiples à l'émission (notée MAI) et l'interférence entre symboles (notée ISI) introduite par la sélectivité fréquentielle du canal. En réception, ces différentes sources d'interférence s'ajoutent et rendent particulièrement délicat le problème de la récupération de l'information utile.

Les travaux précurseurs effectués par S. Verdu dans les années 1980 ont clairement démontré l'intérêt d'exploiter les propriétés structurelles de l'interférence entre utilisateurs (MUI), entre antennes (MAI) et entre symboles (ISI) en vue d'améliorer la performance pour un nombre d'utilisateurs/chip (encore appelée "load") fixé ou d'améliorer la load à performance fixée.

De nombreux types de détecteurs linéaires ont été étudiés, capables de supporter une load plus ou moins élevée, qui peut être évaluée analytiquement en régime asymptotique. Sans le recours aux techniques itératives, les performances de ces détecteurs restent très inférieures à la performance d'un détecteur ML, c'est-à-dire un détecteur utilisant un maximum de vraisemblance(pour un système avec ou sans codage).

La classe des détecteurs non linéaires construits à partir d'une annulation linéaire itérative de l'interférence (notée LIC-ID) offre ainsi un excellent compromis entre performance et complexité. Les détecteurs LIC-ID utilisent les fonctionnalités suivantes : filtrage linéaire, régénération pondérée de l'interférence (de quelque nature qu'elle soit), soustraction de l'interférence régénérée au signal reçu. Ils délivrent des décisions sur les données modulées (ou symboles) transmises dont la fiabilité augmente de façon monotone avec chaque nouvelle tentative. Les détecteurs LIC-ID qui sont destinés à supprimer l'ISI (par bloc) atteignent asymptotiquement la performance d'un détecteur optimal ML avec une complexité de calcul similaire à celle d'un égaliseur linéaire. Les détecteurs LIC-ID qui sont destinés à lutter contre la MUI approchent la performance du détecteur ML optimal avec une complexité de calcul comparable à celle d'un simple détecteur linéaire.

Un point remarquable des détecteurs LIC-ID est qu'ils peuvent être aisément combinés avec les décisions dures ou pondérées délivrées par le décodeur de canal, réalisant ainsi une détection et un décodage des données de manière disjointe et itérative.

Pour des systèmes CDMA surchargés (MUI par hypothèse) transmettant sur des canaux MIMO sélectifs en fréquence, le niveau d'interférence est tel que le recours aux récepteurs LIC-ID s'avère indispensable en réception. Lorsqu'une stratégie itérative est choisie, la complexité des récepteurs ne peut être abaissée, et rendue raisonnable, qu'en simplifiant au maximum les traitements par itération. Les détecteurs LIC-ID ont été étudiés séparément pour le cas ISI et pour le cas MUI dans le document [1] (voir ci-après), dans le cas ISI et

MUI dans [2] (voir ci-après).

[1] A.M. Chan, G.W. Wornell, "A New Class of Efficient Block-Iterative Interference Cancellation Techniques for Digital Communication Receivers," IEEE J. VLSI Signal Processing (Special Issue on Signal Processing for Wireless Communication Systems), vol. 30, pp.197-215, Jan.-Mar. 2002.

[2] W. Wang, V.H. Poor, "Iterative (Turbo) Soft Interference Cancellation and Decoding for Coded CDMA," IEEE Trans. Commun., vol. COM-47, no. 9, pp. 2356-2374, Sept. 1999.

Leur généralisation au cas MUI+MAI+ISI constitue toujours un sujet de recherche ouvert, du fait notamment de la complexité du traitement à effectuer, ce dernier impliquant des calculs sur des matrices de tailles particulièrement importantes.

Lorsqu'une hypothèse d'orthogonalité existe entre les différents utilisateurs à l'émission, une approche séduisante est de rétablir l'orthogonalité au niveau chip préalablement à toute tentative de détection multiutilisateur. La détection multiutilisateur optimale se résume alors à un banc de filtres adaptés à chaque utilisateur. Cette approche, développée dans le document [3] (voir ci-après) pour un modèle de communication CDMA non surchargé transmettant sur un canal SISO sélectif en fréquence, s'avère optimale dès lors qu'on considère, par exemple, un étalement apériodique.

[3] M. Lenardi, D.T. Slock, "A Rake Receiver with Intracell Interference Cancellation for DS-CDMA synchronous Downlink with Orthogonal Codes," IEEE VTC, pp. 430-434, 2000.
La présente invention dépasse le cadre de cette référence en considérant un modèle de communication CDMA surchargé transmettant sur un canal MIMO sélectif en fréquence.

## PRÉSENTATION DE L'INVENTION

L'invention propose, selon un premier aspect, un procédé de réception selon l'une des revendications 1 à 21.
Selon un deuxième aspect, l'invention propose un système de transmission selon la revendication 22.
Selon un troisième aspect, l'invention propose un système de réception selon l'une des revendications 23 à 33.
C'est un objet de la présente invention que de proposer un récepteur pour émission CDMA "Multicode" (K>T) et/ou surchargée (K flux ou utilisateurs potentiels, facteur d'étalement N<K) sur canal MIMO (T antennes d'émission et R antennes de réception) sélectif en fréquence, sous les hypothèses générales d'absence de CSI (i.e. Information sur l'état du canal) à l'émission et de connaissance parfaite de CSI en réception. Ce récepteur est basé sur une combinaison de techniques et mécanismes simples, en vue d'obtenir la meilleure qualité de service possible à efficacité spectrale et SNR (i.e. Rapport Signal sur Bruit) fixés, ou, corollairement, le meilleur débit utile possible, à qualité de service, bande et SNR fixés.
A cet effet, l'invention suppose à l'émission un dispositif comprenant :

- Des moyens pour garantir une décorrélation temporelle des échantillons de bruit affectant les chips lorsqu'on reforme en réception le modèle d'accès multiple à K utilisateurs potentiels en l'absence supposée de MAI+ISI, lesdits moyens comprenant un entrelacement chip avant transmission sur le canal MIMO ou un étalement apériodique. Notons que si un entrelacement chip n'est pas nécessaire pour un codage interne linéaire apériodique, celui-ci reste optionnel.

L'invention propose un dispositif d'égalisation et de décodage itératif comportant un détecteur de données recevant les données en provenance des différentes antennes d'émission comprenant :

- Un premier filtrage linéaire traitant pour chaque antenne d'émission l'interférence MAI+ISI et générant des statistiques sur les chips émis en tirant parti de la diversité spatiale offerte par les R antennes de réception ;
- Des moyens pour, préalablement ou postérieurement à tout filtrage linéaire associé à chaque antenne d'émission, soustraire au signal reçu l'interférence MAI+ISI régénérée pour cette antenne à partir des estimées des données modulées (ou symboliques) émises à disposition ;
- Des moyens pour réordonner les chips égalisés en un système d'accès multiple à K utilisateurs potentiels dans lequel le bruit additif affectant les différents chips est supposé gaussien et blanc ;
- Un second filtrage linéaire traitant l'interférence MUI sur la base des chips précédemment égalisés et réordonnés et générant des statistiques sur les données symboliques émises par chacun des K utilisateurs potentiels ;
- Des moyens pour préalablement ou postérieurement à tout filtrage linéaire pour chaque utilisateur, soustraire au signal observé l'interférence MUI régénérée pour cet utilisateur à partir des estimées des données symboliques émises à disposition ;
- Des moyens pour traiter ces statistiques et générer une information probabiliste sur bit exploitable par un décodage externe ;
- Un décodage externe à entrées et sorties pondérées, capable de générer une information probabiliste dite extrinsèque, pertinente pour le calcul des estimées des données symboliques émises (au sens du critère de minimisation de l'erreur quadratique moyenne, ou MMSE) ;
- Des moyens pour, récursivement, concaténer la sortie du décodage externe avec le régénérateur d'interférence MAI+ISI d'une part et le régénérateur d'interférence MUI d'autre part.

## DESCRIPTION DES FIGURES

D'autres caractéristiques et avantages de l'invention ressortiront encore de la description qui suit, laquelle est purement illustrative et non limitative et doit être lue en regard des dessins annexés sur lesquels :

- La figure 1 illustre un concept général de transmission sur un canal MIMO sélectif en fréquence ;
- La figure 2 illustre une première partie d'un procédé d'émission incluant un codage de canal externe de l'information numérique, un entrelacement, et un démultiplexage en K flux (un par utilisateur potentiel) ;

- La figure 3 illustre une deuxième partie du procédé d'émission selon la figure 2, incluant une codage interne linéaire correspondant à un étalement spatio-temporel (ou spatio-fréquentiel) apériodique puis un multiplexage sur les T antennes d'émission.

- La figure 4 illustre une deuxième partie du procédé d'émission selon la figure 2, incluant un codage interne linéaire correspondant à un étalement spatio-temporel (ou spatio-fréquentiel) apériodique, un multiplexage sur une voie unique, un entrelacement au niveau chip, et un démultiplexage sur les T antennes d'émission ;

- La figure 5 illustre une première partie d'une variante d'un procédé d'émission, incluant un codage de canal externe de l'information numérique, un entrelacement, un premier démultiplexage en T flux (démultiplexage spatial) puis un second démultiplexage en U flux (démultiplexage en codes) ;

- La figure 6 illustre une deuxième partie du procédé d'émission selon la figure 4, incluant un étalement temporel (ou fréquentiel) apériodique et un multiplexage indépendant par antenne, compatible avec le mode HSDPA de l'UMTS ;

- La figure 7, illustre une deuxième partie du procédé d'émission selon la figure 4, incluant un étalement temporel (ou fréquentiel) apériodique suivi d'un multiplexage sur une voie unique, et un entrelacement au niveau chip, puis d'un démultiplexage sur les T antennes d'émission , compatible avec le mode HSDPA de l'UMTS;

- La figure 8 illustre un canal équivalent plat ergodique ou à évanouissement par blocs obtenue par une décomposition du canal MIMO sélectif en fréquence dans la base de Fourier et qui sert couramment de modèle pour les modulations multiporteuses ;

- Les figures 9 et 10 illustrent respectivement une première et deuxième variantes de l'architecture d'une première partie d'un récepteur LIC-ID selon l'invention, où seuls sont indiqués les blocs fonctionnels, nécessaires à la compréhension de l'algorithme. La figure 9 se rapporte à un schéma d'émission selon les figures 2-4, et 5-7. La figure 10 se rapporte au schéma d'émission décrit par les figures 2-3 et 5-6 ;

- Les figures 11a et 11b représentent deux méthodes d'implémentation équivalentes des récepteurs LIC-ID traitant les interférences MAI+ISI, la méthode d'implémentation de la figure 11a représentant les parties filtrage et régénération d'interférences MAI+ISI de la première partie du détecteur global illustrée sur la figure 9 ou 10 ;

- Les figures 12a et 12b représentent deux méthodes d'implémentation équivalentes des récepteurs LIC-ID traitant les interférences MUI, la méthode d'implémentation de la figure 12a représentant les parties filtrage et régénération d'interférences MUI de la première partie du détecteur global illustrée sur la figure 9 ou 10.

- La figure 13 illustre l'architecture de la deuxième partie du récepteur LIC-ID selon l'invention (la première partie du détecteur étant représentée par la figure 9 ou 10), où seuls sont indiqués les blocs fonctionnels, nécessaires à la compréhension de l'algorithme.

## DESCRIPTION DE FORMES PRIVILEGIEES DE LA PRESENTE INVENTION

## 1. Structure générale de l'émetteur

La réception est intimement liée au mode d'émission choisi, ce dernier pouvant être défini par un schéma de modulation/codage à grande efficacité spectrale, et haute capacité d'adaptabilité, reposant sur l'emploi de modulations par étalement de spectre et sur l'utilisation d'antennes multiples en émission et en réception. La solution proposée est pertinente sous l'hypothèse d'une absence de connaissance du canal à l'émission (pas de CSI) et d'une connaissance parfaite du canal en réception (CSI). Le modèle de communication est brièvement décrit dans la suite, en vue d'introduire une forme privilégiée de la présente invention.

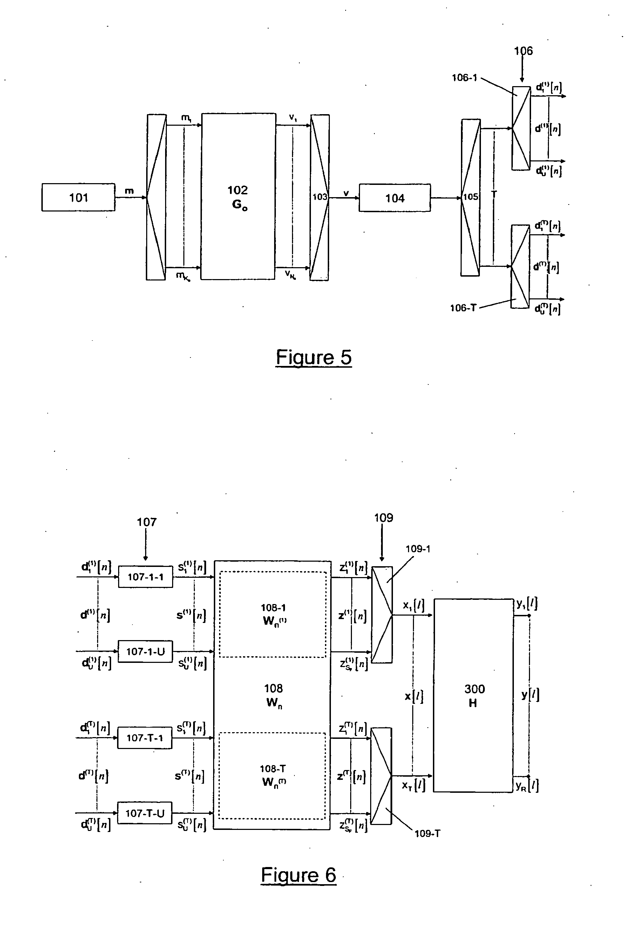

En référence à la figure 2 et à la figure 5, les données numériques utiles sont collectées et groupées en un message m de $K_o$ bits constituant la source 101 des données numériques en émission. A tout message m, un code externe $C_o$ linéaire, de matrice génératrice $\mathbf{G}_o$ de dimension $N_o\,K_o$ et construit sur $F_2$ assigne en 102 un mot de code v de longueur $N_o$ bits, défini par la relation matricielle :

$$\mathbf{v} = \mathbf{G}_o\,\mathbf{m}$$

Le rendement du codage externe est :

$$\rho = \frac{K_o}{N_o}$$

La longueur $N_o$ des mots de code est liée aux différents paramètres du système par la relation :

$$N_o = K \times L \times q$$

où K désigne le nombre total d'utilisateurs potentiels, L la longueur des paquets (en temps symbole) et q le nombre de bits par symbole de modulation. Le code peut être de tout type, par exemple un code convolutif, un turbo-codes, un code LDPC... Dans une configuration de type accès multiple, le message m consiste en une pluralité de messages issus de sources différentes et multiplexés. Le codage s'effectue indépendamment sur chaque message composant. Le mot de code **v** résulte de la concaténation en 103 des différents mots de code produits.

Le mot de code **v** est envoyé dans un entrelaceur 104 (opérant au niveau binaire et, le cas échéant, doté d'une structure particulière). Dans une configuration de type accès multiple, l'entrelacement agit par morceaux sur les différents mots de code placés les uns à la suite des autres. La sortie de cet entrelaceur est morcelée en $KL$ q-uplets de bits, appelés entiers. Le flux d'entiers est soumis à un procédé de démultiplexage 105 sur K voies distinctes, K pouvant être choisi de sorte à être strictement supérieur à T. La sortie de cette opération est une matrice d'entiers **D** de dimension $K \times L$. Les L colonnes **d**[$n$] $n$ = 0, ..., $L$-1 de cette matrice **D** possèdent la structure suivante :

$$\mathbf{d}[n] = \begin{bmatrix} \mathbf{d}_1[n]^{\mathsf{T}} & \mathbf{d}_2[n]^{\mathsf{T}} & \cdots & \mathbf{d}_K[n]^{\mathsf{T}} \end{bmatrix}^{\mathsf{T}} \in F_2^{qK}$$

où les entiers composants $\mathbf{d}_k[n]$ $k$ = 1, ..., $K$ sont eux-mêmes structurés comme suit :

$$\mathbf{d}_k[n] = \begin{bmatrix} d_{k,1}[n] & d_{k,2}[n] & \cdots & d_{k,q}[n] \end{bmatrix}^{\mathsf{T}} \in F_2^q$$

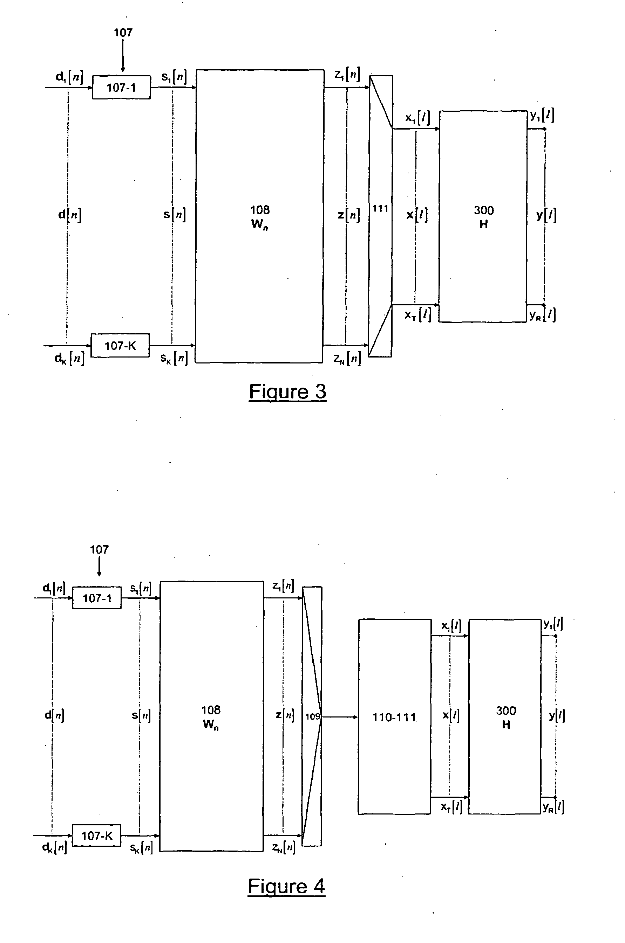

En référence à la figure 3, 4, 6 ou 7, les entiers $\mathbf{d}_k[n]$ de la matrice **D** sont ensuite individuellement modulés en 107 en données modulées, ou plus précisément en symboles complexes $s_k[n]$ d'une constellation $\mathfrak{I} \subset \mathbb{C}$ à $Q = 2^q$ éléments au travers d'une table de modulation $\mu : F_2^q \mapsto \mathfrak{I}$. Cette opération transforme la matrice d'entiers **D** en une matrice complexe **S** de dimension $K \times L$ dont les L colonnes **s**[$n$] $n$ = 0, ..., $L$-1 sont structurées de la manière suivante :

$$\mathbf{s}[n] \triangleq \mu(\mathbf{d}[n]) = \begin{bmatrix} s_1[n] & s_2[n] & \cdots & s_K[n] \end{bmatrix}^{\mathsf{T}} \in \mathfrak{I}^K$$

Il est utile de préciser les relations inverses suivantes :

$$\mu^{-1}(\mathbf{s}[n]) \triangleq \mathbf{d}[n] \quad \mu^{-1}(s_k[n]) \triangleq \mathbf{d}_k[n] \quad \mu_j^{-1}(s_k[n]) \triangleq d_{k,j}[n]$$

On effectue ensuite un codage interne linéaire (ou étalement des données). Plusieurs options sont possibles en ce qui concerne la définition de la matrice génératrice **W** du codage interne linéaire (plus précisément : matrice génératrice du codage interne linéaire sur le corps des complexes) qui peuvent influer sur la structure de l'émetteur et sur les caractéristiques des front-ends linéaires en réception.

- Etalement (ou codage interne linéaire) périodique où **W** est réutilisée à chaque temps symbole. Pour garantir la décorrélation temporelle des échantillons de bruit affectant les chips lorsque l'on reforme le système à accès multiple après égalisation, un entrelacement chip doit être appliqué avant transmission sur le canal MIMO;
- Etalement (ou codage interne linéaire) apériodique où **W**$_n$ dépend explicitement du temps symbole. L'étalement apériodique garantit la décorrélation temporelle des échantillons de bruit affectant les chips lorsque l'on reforme le système à accès multiple après égalisation. L'entrelacement chip n'est plus nécessaire mais reste optionnel.

Par ailleurs, l'étalement peut être spatio-temporel (ou spatio-fréquentiel) ou uniquement temporel (ou fréquentiel) lorsque réalisé indépendamment par antenne.

### 1.1 Etalement (ou codage interne linéaire) spatio-temporel (ou spatio-fréquentiel)

On suppose ici, en référence à la figure 3 ou 4, un étalement spatio-temporel (ou spatio-fréquentiel) périodique ou apériodique.

L'étalement spatio-temporel (ou spatio-fréquentiel) est réalisé pour chaque matrice **S** au moyen d'une matrice de codage interne $\mathbf{W}_n$ (qui se note **W** dans le cas périodique) de dimension $N \times K$ avec :

$$N = T \times S_F \quad S_F \in \mathbb{Z}$$

Cette matrice génératrice est aussi appelée matrice d'étalement. A titre d'exemple, on peut considérer que cette matrice est construite à partir de N codes d'étalement orthogonaux de facteur d'étalement N. Ce codage interne linéaire correspond donc, dans ce cas, à un étalement spatio-temporel (spatio-fréquentiel) de facteur d'étalement N. On appelle rendement de codage interne (ou load) du système le rapport :

$$\alpha = \frac{K}{N}$$

La multiplication en 108 du vecteur de symboles **s**[$n$] par la matrice génératrice $\mathbf{W}_n$ donne lieu à un vecteur :

$$\mathbf{z}[n] \triangleq \mathbf{W}_n \mathbf{s}[n] = \begin{bmatrix} z_1[n] & z_2[n] & \cdots & z_N[n] \end{bmatrix}^{\mathsf{T}} \in \mathbb{C}^N$$

La relation peut également être écrite au niveau matriciel :

$$\mathbf{Z} \triangleq \mathbf{W}_n \mathbf{S} \in \mathbb{C}^{N \times L}$$

### 1.1.1 Cas où l'étalement est suivi d'un entrelacement chip

Cet entrelacement chip est nécessaire à mettre en oeuvre si l'étalement est périodique (W=W$_n$), afin de pouvoir mettre en oeuvre (par la suite) la réception selon l'invention.

En référence à la figure 4, les vecteurs de chips **z**[$n$] $n$ = 0,...,$L$-1 sont multiplexés en 109 en un flux de chips unique. Le flux de chips attaque alors un entrelaceur chip 110, dont la sortie est démultiplexée en 111 en T flux de chips distincts (un par antenne d'émission).

Cette opération a pour effet de transformer la matrice de chips **Z** de dimension $N \times L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips **X** de dimension $T \times LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes **x**[$l$] $l$ = 0,..., $LS_F$ -1 constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^{T}$$

### 1.1.2 Cas où l'étalement qui n'est pas suivi d'un entrelacement chip

En référence à la figure 3, les vecteurs de chips $\mathbf{z}[n]$ $n = 0$, ..., $L$-1 sont démultiplexés en T flux de chips distincts (111, un par antenne d'émission). Cette opération a pour effet de transformer la matrice de chips $\mathbf{Z}$ de dimension $N \times L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips $\mathbf{X}$ de dimension $T \times LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes x[$l$] $l = 0$,..., $LS_F$ - 1 constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^{T}$$

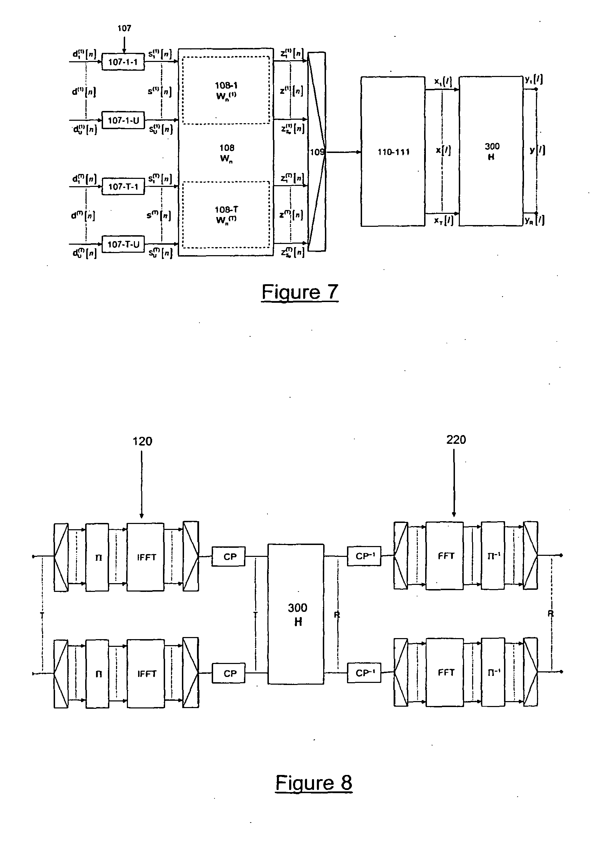

**1.2 Etalement (ou codage interne linéaire) temporel (ou fréquentiel)** Dans cette variante selon l'invention, en référence à la figure 6 ou 7, compatible avec le mode HSDPA de la norme UMTS, on dispose de $S_F$ codes orthogonaux de longueur $S_F$. Le paramètre N est toujours un multiple de T :

$$N = T \times S_F \quad S_F \in \mathbb{Z}$$

Les $S_F$ codes à disposition sont réutilisés sur chaque antenne d'émission (principe dit du « code re-use »). L'étalement, réalisé indépendamment par antenne, est temporel (ou fréquentiel), apériodique ou périodique ($\mathbf{W}_n = \mathbf{W}$ dans le cas périodique).

Ceci impose que K soit également un multiple de T :

$$K = T \times U \quad U \in \mathbb{Z}$$

Cette condition non limitative selon l'invention entraîne alors une nouvelle expression du rendement de codage interne (encore appelé load) :

$$\alpha = \frac{U}{S_F}$$

La matrice génératrice $\mathbf{W}_n$ possède une structure diagonale par blocs :

$$\mathbf{W}_n = \begin{bmatrix} \mathbf{W}_n^{(1)} & & & 0 \\ & \mathbf{W}_n^{(2)} & & \\ & & \ddots & \\ 0 & & & \mathbf{W}_n^{(T)} \end{bmatrix} \in \mathbb{C}^{N \times K}$$

le bloc $\mathbf{W}_n^{(t)}$ de la matrice génératrice étant associé à l'antenne t de dimension $S_F \times U$.

En référence à la figure 5, le vecteur d'entier $\mathbf{d}[n]$ (démultiplexé en 105, après avoir été codé en 102 et entrelacé en 104) émis à l'instant $n$ possède la structure particulière suivante :

$$\mathbf{d}[n] = \begin{bmatrix} \mathbf{d}^{(1)}[n]^\mathsf{T} & \mathbf{d}^{(2)}[n]^\mathsf{T} & \cdots & \mathbf{d}^{(T)}[n]^\mathsf{T} \end{bmatrix}^\mathsf{T} \in F_2^{qK}$$

où les vecteurs de symboles $\mathbf{d}^{(t)}[n]$ $t = 1,...,T$ sont eux-mêmes définis comme :

$$\mathbf{d}^{(t)}[n] = \begin{bmatrix} \mathbf{d}_1^{(t)}[n]^\mathsf{T} & \mathbf{d}_2^{(t)}[n]^\mathsf{T} & \cdots & \mathbf{d}_U^{(t)}[n]^\mathsf{T} \end{bmatrix}^\mathsf{T} \in F_2^{qU}$$

En référence à la figure 5, la modulation 107 de ces données multiplexées $\mathbf{d}[n]$ donne un vecteur de données modulées (ou encore de symboles) émises à l'instant $n$ ayant la structure particulière suivante :

$$\mathbf{s}[n] = \begin{bmatrix} \mathbf{s}^{(1)}[n]^\mathsf{T} & \mathbf{s}^{(2)}[n]^\mathsf{T} & \cdots & \mathbf{s}^{(T)}[n]^\mathsf{T} \end{bmatrix}^\mathsf{T} \in \mathbb{C}^K$$

où les vecteurs de symboles $\mathbf{s}^{(t)}[n]$ $t = 1,...,T$ sont eux-mêmes définis comme :

$$\mathbf{s}^{(t)}[n] = \begin{bmatrix} s_1^{(t)}[n] & s_2^{(t)}[n] & \cdots & s_U^{(t)}[n] \end{bmatrix}^\mathsf{T} \in \mathbb{C}^U$$

La multiplication 108 du vecteur de symboles s[n] par la matrice génératrice $\mathbf{W}_n$ donne lieu au vecteur :

$$\mathbf{z}[n] \triangleq \mathbf{W}_n \mathbf{s}[n]$$

qui possède également une structure particulière :

$$\mathbf{z}[n] = \begin{bmatrix} \mathbf{z}^{(1)}[n]^\mathsf{T} & \mathbf{z}^{(2)}[n]^\mathsf{T} & \cdots & \mathbf{z}^{(T)}[n]^\mathsf{T} \end{bmatrix}^\mathsf{T} \in \mathbb{C}^N$$

où les vecteurs de chips $\mathbf{z}^{(t)}[n]$ $t = 1,...,T$ sont eux-mêmes définis comme :

$$\mathbf{z}^{(t)}[n] \triangleq \mathbf{W}_n^{(t)} \mathbf{s}^{(t)}[n] = \begin{bmatrix} z_1^{(t)}[n] & z_2^{(t)}[n] & \cdots & z_{S_F}^{(t)}[n] \end{bmatrix}^\mathsf{T} \in \mathbb{C}^{S_F}$$

### 1.2.1 Cas où l'étalement est suivi d'un entrelacement chipCet **entrelacement chip est** nécessaire à mettre en oeuvre si l'étalement est périodique (W=Wₙ), afin de pouvoir mettre en oeuvre (par la suite) la réception selon l'invention.

En référence à la figure 7, les vecteurs de chips $\mathbf{z}[n]$ $n = 0,..., L$-1 sont multiplexés en 109 en un flux de chips unique. Le flux de chips attaque alors un entrelaceur 110, dont la sortie est démultiplexée en 111 en T flux de chips distincts (un par antenne d'émission). Cette opération a pour effet de transformer la matrice de chips $\mathbf{Z}$ de dimension $N{\times}L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips **X** de dimension T x $LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes $\mathbf{x}[l]$ $l = 0, ..., LS_F$ -1 constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^{T}$$

### 1.2.2 Cas où l'étalement qui n'est pas suivi d'un entrelacement chip

En référence à la figure 6, Les vecteurs de chips $\mathbf{z}^{(t)}[n]$ sont ensuite multiplexés en 109-t sur l'antenne d'émission t.

On remarquera que, dans cette variante d'émission, la récupération de la diversité spatiale s'effectue au travers du code $G_0$ (en 102) et de l'entrelacement binaire (en 104) externes. La capacité de surcharge, connue pour augmenter avec la longueur des codes d'étalement, est moindre.

Le procédé d'émission s'inscrit naturellement dans la classe générale des codes espace-temps. L'efficacité spectrale du système (en bits par utilisation du canal), sous l'hypothèse d'un filtre de Nyquist idéal à bande limitée, est égale à :

$$\eta = T \times \rho_o \times q \times \alpha$$

En pratique, le filtre de mise en forme à l'émission présente un facteur $\varepsilon$ de débordement non nul (roll-off). En réception, on pourra appliquer un filtre adapté à ce filtre d'émission pour toutes les antennes de réception. Il est supposé que les fonctions d'estimation de canal et de synchronisation de rythme et de porteuse sont réalisées de telle sorte que les coefficients de la réponse impulsionnelle du canal soient espacés régulièrement d'une valeur égale au temps chip (canal équivalent en bande de base discret au temps chip). Cette hypothèse est légitime, le théorème d'échantillonnage de Shannon imposant un échantillonnage au rythme $(1+\varepsilon)/T_c$ qui peut être approché par $1/T_c$ lorsque $\varepsilon$ est petit. On pourra généraliser de façon directe des expressions qui suivent pour un échantillonnage égal à un multiple de $1/T_c$.

### 2. Modèle de canal

La transmission s'effectue sur un canal B-blocs à entrées et sorties multiples (MIMO) sélectif en fréquence :

$$\mathbf{H} \triangleq \left\{ \mathbf{H}^{(1)}, \mathbf{H}^{(2)}, \ldots, \mathbf{H}^{(B)} \right\}$$

Le canal $\mathbf{H}^{(b)}$ est supposé constant sur $L_X$ chips avec la convention :

$$L \times S_F = B \times L_X \quad B \in \mathbb{Z}$$

La matrice de chips **X** peut être segmentée en B matrices de chips distinctes $\mathbf{X}^{(1)},...,\mathbf{X}^{(B)}$, de dimension $T \times L_x$ (complétées à droite et à gauche par des zéros physiques ou temps de garde si besoin est), chaque matrice $\mathbf{X}^{(b)}$ voyant le canal $\mathbf{H}^{(b)}$. Les cas extrêmes du modèle B-blocs sont les suivants :

$$B = 1 \text{ et } L_X = LS_F \quad \text{modèle quasi-statique}$$

$$B = LS_F \text{ et } L_X = 1 \quad \text{modèle ergodique (chip)}$$

Une renumérotation des chips est appliquée à l'intérieur de chaque bloc.

### 2.1. Modèle de canal convolutif

Pour tout indice de bloc b, le modèle de canal équivalent en bande de base à temps discret (rythme chip) permet d'écrire le vecteur reçu $\mathbf{y}^{(b)}[l] \in \mathbb{C}^R$ à l'instant chip 1 sous la forme :

$$\mathbf{y}^{(b)}[l] = \sum_{p=0}^{P-1} \mathbf{H}_p^{(b)} \mathbf{x}^{(b)}[l-p] + \mathbf{v}^{(b)}[l]$$

où P désigne la longueur de contrainte du canal (en chips), $\mathbf{x}^{(b)}[l] \in \mathbb{C}^T$ désigne le vecteur complexe de T chips émis à l'instant chip 1, où $\mathbf{H}_p^{(b)} \in \mathbb{C}^{R \times T}$ est le coefficient matriciel indicé p de la réponse impulsionnelle du canal MIMO bloc indicé b et où $\mathbf{v}^{(b)}[l] \in \mathbb{C}^R$ est le vecteur complexe de bruit additif. Les vecteurs complexes de bruit additif $\mathbf{v}^{(b)}$ [*l*] sont supposés indépendants et identiquement distribués selon une loi gaussienne R-dimensionnelle à symétrie circulaire de moyenne nulle et de matrice de covariance $\sigma^2\mathbf{I}$. Les P coefficients de la réponse impulsionnelle sont des matrices complexes de dimension $R \times T$, dont les entrées sont gaussiennes indépendantes identiquement distribuées, de moyenne nulle et de matrice de covariance satisfaisant la contrainte globale de normalisation en puissance :

$$E\left[ \text{diag}\left\{ \sum_{p=0}^{P-1} \mathbf{H}_p^{(b)} \mathbf{H}_p^{(b)\dagger} \right\} \right] = T\mathbf{I}$$

dans le cas d'un système à puissance également répartie entre les différentes antennes d'émission. Sous ces hypothèses, les valeurs propres des matrices de corrélation des différents coefficients du canal MIMO suivent une distribution de Wishart. On souligne qu'une égale répartition de la puissance sur les antennes d'émission est une politique d'allocation de puissance légitime dans le cas d'une absence de connaissance du canal à l'émetteur (pas de CSI).

### 2.2. Modèle de canal matriciel bloc

Pour introduire l'algorithme de décodage des données, on se doit de faire apparaître un système matriciel sur l'ensemble du type :

$$\underline{\mathbf{y}}^{(b)} = \underline{\mathbf{H}}^{(b)}\underline{\mathbf{x}}^{(b)} + \underline{\mathbf{v}}^{(b)}$$

où :

$$\underline{\mathbf{y}}^{(b)} \triangleq \left[ \mathbf{y}^{(b)}\left[L_x -1+P-1\right]^\mathsf{T} \quad \mathbf{y}^{(b)}\left[L_x -2+P-1\right]^\mathsf{T} \quad \cdots \quad \mathbf{y}^{(b)}\left[0\right]^\mathsf{T} \right]^\mathsf{T} \in \mathbb{C}^{(L_x+P-1)R}$$

$$\underline{\mathbf{v}}^{(b)} \triangleq \left[ \mathbf{v}^{(b)}\left[L_x -1+P-1\right]^\mathsf{T} \quad \mathbf{v}^{(b)}\left[L_x -2+P-1\right]^\mathsf{T} \quad \cdots \quad \mathbf{v}^{(b)}\left[0\right]^\mathsf{T} \right]^\mathsf{T} \in \mathbb{C}^{(L_x+P-1)R}$$

$$\underline{\mathbf{x}}^{(b)} \triangleq \left[ \mathbf{x}^{(b)}\left[L_x -1\right]^\mathsf{T} \quad \mathbf{x}^{(b)}\left[L_x -2\right]^\mathsf{T} \quad \cdots \quad \mathbf{x}^{(b)}\left[0\right]^\mathsf{T} \right]^\mathsf{T} \in \mathbb{C}^{L_x T}$$

et où $\underline{\mathbf{H}}^{(b)}$ est la matrice de Sylvester pour le canal :

$$\underline{\mathbf{H}}^{(b)} = \begin{bmatrix} \mathbf{H}_{P-1}^{(b)} & & & & & & & & \\ \mathbf{H}_{P-2}^{(b)} & \mathbf{H}_{P-1}^{(b)} & & & & & & & \\ & & \ddots & & & & & & \\ & & & \mathbf{H}_0^{(b)} & \mathbf{H}_1^{(b)} & \cdots & \mathbf{H}_{P-1}^{(b)} & & \\ & & & & \mathbf{H}_0^{(b)} & \mathbf{H}_1^{(b)} & \cdots & \mathbf{H}_{P-1}^{(b)} & \\ & & & & & \ddots & \ddots & \ddots & \ddots \\ & & & & & \mathbf{H}_0^{(b)} & \mathbf{H}_1^{(b)} & \cdots & \mathbf{H}_{P-1}^{(b)} \\ & & & & & & & \ddots & \\ & & & & & & & \mathbf{H}_0^{(b)} & \mathbf{H}_1^{(b)} \\ & & & & & & & & \mathbf{H}_0^{(b)} \end{bmatrix} \in \mathbb{C}^{(L_x+P-1)R \times L_x T}$$

### 2.3. Modèle de canal matriciel à fenêtre glissante

En pratique, pour réduire les dimensions, on utilise un modèle à fenêtre glissante de longueur :

$$L_W = L_1 + L_2 + 1 \ll L_x$$

On obtient le nouveau système :

$$\underline{\mathbf{y}}^{(b)}\left[l\right] = \underline{\mathbf{H}}^{(b)}\underline{\mathbf{x}}^{(b)}\left[l\right] + \underline{\mathbf{v}}^{(b)}\left[l\right]$$

où :

$$\underline{\mathbf{y}}^{(b)}\left[l\right]=\left[\ \mathbf{y}^{(b)}\left[l+L_1\right]^{\mathsf{T}}\ \cdots\ \mathbf{y}^{(b)}\left[l-L_2\right]^{\mathsf{T}}\ \right]^{\mathsf{T}}\in\mathbb{C}^{L_W R}$$

$$\underline{\mathbf{x}}^{(b)}\left[l\right]=\left[\ \mathbf{x}^{(b)}\left[l+L_1\right]^{\mathsf{T}}\ \cdots\ \mathbf{x}^{(b)}\left[l-L_2-P+1\right]^{\mathsf{T}}\ \right]^{\mathsf{T}}\in\mathbb{C}^{(L_W+P-1)T}$$

$$\underline{\mathbf{v}}^{(b)}\left[l\right]=\left[\ \mathbf{v}^{(b)}\left[l+L_1\right]^{\mathsf{T}}\ \cdots\ \mathbf{v}^{(b)}\left[l-L_2\right]^{\mathsf{T}}\ \right]^{\mathsf{T}}\in\mathbb{C}^{L_W R}$$

et où $\mathbf{H}^{(b)}$ est la matrice de Sylvester pour le canal 300 :

$$\underline{\mathbf{H}}^{(b)}=\begin{bmatrix}\mathbf{H}_0^{(b)} & \mathbf{H}_1^{(b)} & \cdots & \mathbf{H}_{P-1}^{(b)} & & & \\ & \mathbf{H}_0^{(b)} & \mathbf{H}_1^{(b)} & \cdots & \mathbf{H}_{P-1}^{(b)} & & \\ & & \ddots & \ddots & \ddots & \ddots & \\ & & & \mathbf{H}_0^{(b)} & \mathbf{H}_1^{(b)} & \cdots & \mathbf{H}_{P-1}^{(b)}\end{bmatrix}\in\mathbb{C}^{L_W R\times(L_W+P-1)T}$$

### 3. Transmission monoporteuse sur canal MIMO à trajets multiples (HSDPA)

On suppose ici que le débit est très élevé et que le temps de cohérence du canal est grand, de telle sorte que $L_X \gg S_F$. Pour le mode HSDPA de la norme UMTS, le canal est quasi-statique, c'est-à-dire lorsque B=1.

### 4. Transmission multiporteuse sur canal MIMO à trajets multiples (MC-CDMA)

L'étalement (ou encore le codage interne linéaire) est ici spatio-fréquentiel ou fréquentiel. En référence à la figure 8, il est bien connu de l'homme de l'art que l'introduction d'une IFFT en émission 120 et d'une FFT en réception 220 (aux entrelacements près) donne un canal équivalent non sélectif en fréquence (canal modélisé par une matrice circulante grâce à l'emploi de préfixes cycliques, puis rendu diagonal dans la base de Fourier). Ainsi chaque porteuse voit un canal MIMO plat. Sous le formalisme précédemment présenté, le canal après FFT peut être vu comme un canal non sélectif (P = 1) et B-blocs. La largeur de la fenêtre glissante pour le calcul des filtres est $L_W = 1$.

### 5. Structure générale du récepteur 200

Le récepteur itératif 200 est décomposé en deux étages successifs d'annulation d'interférence. Un premier étage annule les interférences MAI+ISI au niveau chip et tente de rétablir l'orthogonalité à l'intérieur des groupes d'utilisateurs sur toutes les antennes. Le second étage annule les interférences MUI, une fois l'orthogonalité rétablie à l'intérieur des groupes d'utilisateurs. Les deux étages sont activés plusieurs fois. Compte tenu des dimensions du problème, seules des approches linéaires basées sur des filtres de Wiener (critère MMSE) ou de simples filtres adaptés (mono utilisateur) sont envisagées. Dans les deux cas, une version pondérée de l'interférence est retirée avant ou après filtrage.

### 5.1. Estimation MMSE des symboles émis

A toute itération i, on suppose une connaissance a priori sur les données exprimée au travers de rapports logarithmiques sur les bits des symboles (encore appelé données modulées) émis :

$$\pi_{k,j}^i\left[n\right]\triangleq\ln\frac{\mathrm{Pr}^i\left[d_{k,j}\left[n\right]=1\right]}{\mathrm{Pr}^i\left[d_{k,j}\left[n\right]=0\right]}$$

Par convention, ces rapports valent 0 à la première itération.

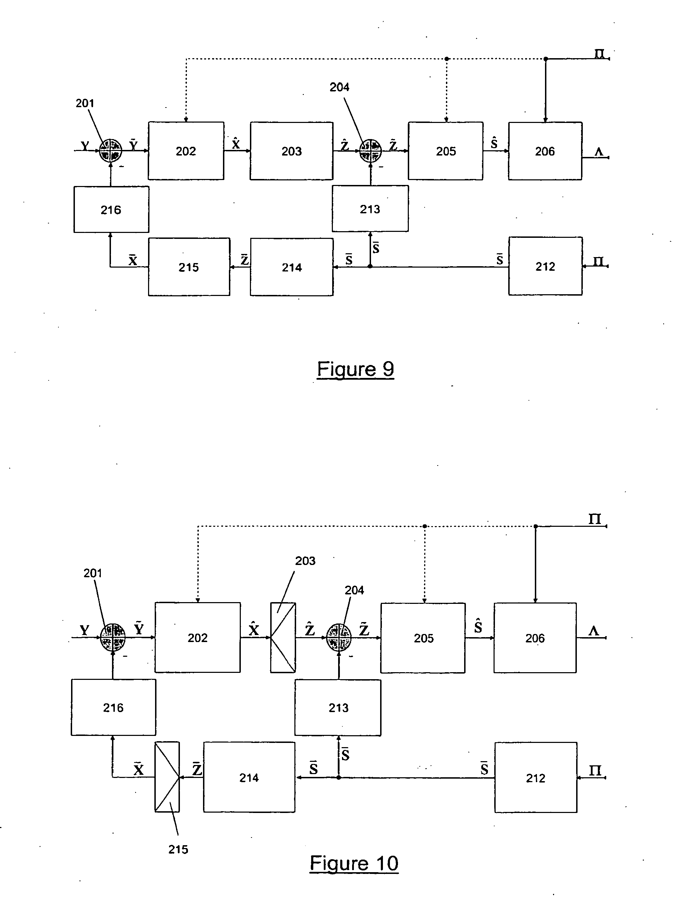

En référence à la figure 9 ou 10, à partir de cette information a priori, on peut trouver en 212 la matrice $\overline{S}^i$ des estimées, au sens du critère MMSE, des symboles $s_k\,[n]$ par les différents utilisateurs $k = 1,..., K$ aux instants $n = 0,...,$

*L*-1. L'estimée d'un symbole s'exprime comme :

$$\overline{s}_k^i[n] \triangleq \sum_{s \in \mathfrak{I}} s \times \Pr^i\left[ s_k[n] = s \right]$$

Lorsque la profondeur de l'entrelacement espace-temps est grande, la probabilité a priori sur un symbole peut être approchée par le produit des probabilités marginales des bits qui le composent :

$$\Pr^i\left[ s_k[n] = s \right] \approx \prod_{j=1}^q \Pr^i\left[ d_{k,j}[n] = \mu_j^{-1}(s) \right]$$

l'égalité ayant lieu pour une profondeur d'entrelacement infinie.

En introduisant le rapport logarithmique $\pi_{k,j}^i[n]$ des probabilités a priori sur bit précédemment défini, on peut écrire que :

$$\Pr^i\left[ s_k[n] = s \right] = \frac{1}{2^q} \prod_{j=1}^q \left\{ 1 + \left( 2\mu_j^{-1}(s) - 1 \right) \tanh\left( \frac{\pi_{k,j}^i[n]}{2} \right) \right\}$$

et trouver finalement :

$$\overline{s}_k^i[n] \triangleq \frac{1}{2^q} \sum_{s \in \mathfrak{I}} s \times \prod_{j=1}^q \left\{ 1 + \left( 2\mu_j^{-1}(s) - 1 \right) \tanh\left( \frac{\pi_{k,j}^i[n]}{2} \right) \right\}$$

## 5.2. Estimation MMSE des chips émis

A partir des vecteurs de données symboliques estimées $\overline{\mathbf{s}}^i[n]$, on peut créer en 214 (en appliquant aux estimées la matrice d'étalement $\mathbf{W}_n$ utilisée à l'émission) les vecteurs de chips estimés à chaque itération i :

$$\overline{\mathbf{z}}^i[n] = \mathbf{W}_n \, \overline{\mathbf{s}}^i[n] = \left[ \overline{z}_1^i[n] \quad \overline{z}_2^i[n] \quad \cdots \quad \overline{z}_N^i[n] \right]^{\mathsf{T}}$$

qui composent la matrice estimée $\overline{Z}^i$.
Un traitement 215 (pouvant comprendre un multiplexage, un démultiplexage, un entrelacement chip, un découpage par blocs), est alors mis en oeuvre.
Le traitement 215 est un traitement conforme à celui appliqué en émission en aval de l'étalement 108 (voir une des figures 3, 4, 6 et 7).
Ainsi, par exemple, si le traitement en émission comprenait un simple multiplexage sur les T antennes d'émission, tel qu'illustré sur les figures 3 et 6, le traitement 215 comprend un multiplexage sur T voies (illustré sur la figure 10).
Ainsi, par exemple, si le traitement en émission comprenait un multiplexage 109 sur une voie puis un entrelacement chip 110 et un démultiplexage (111) sur les T antennes d'émission, tel qu'illustré sur les figures 4 et 7, le traitement 215 en réception comprend un multiplexage sur une voie, un entrelacement chip et un démultiplexage sur T voies (illustré sur la figure 9).
En sortie du traitement 215, est alors généré (déduit de $\overline{Z}^i$) les matrices $\overline{X}^{i(1)},...,\overline{X}^{i(B)}$ dont les colonnes sont les vecteurs :

$$\overline{\mathbf{x}}^{i(b)}[l] = \begin{bmatrix} \overline{x}_1^{i(b)}[l] & \overline{x}_2^{i(b)}[l] & \cdots & \overline{x}_T^{i(b)}[l] \end{bmatrix}^{\mathsf{T}} \in \mathbb{C}^T$$

qui servent à l'annulation linéaire itérative de les interférences MAI+ISI en 201.

### 5.3. Rétablissement de l'orthogonalité entre les groupes d'utilisateurs par égalisation au temps chip

Dans cette section, on considère un bloc donné d'indice b qui a été émis par l'antenne t, le traitement étant supposé identique pour tous. L'invention suggère de remplacer la détection optimale des chips $x_t$ [$l$] (au sens du critère MAP) par une estimation au sens du critère MMSE (biaisée), dérivée sur la base du modèle à fenêtre glissante, dont la complexité est polynomiale en les paramètres du système et non plus exponentielle. A chaque itération i, on calcule en 202 un premier filtre $\mathbf{f}_{t,l}^i \in \mathbb{C}^{L_W R}$ qui, à partir d'une observation actualisée (portant sur une portion du bloc) supprime les interférences MAI+ISI corrompant le chip $x_t$ [$l$] et produit une évaluation $\hat{x}_t$ [$l$] de chips émis en minimisant l'erreur quadratique moyenne (MSE) :

$$E\left[ \left| \hat{x}_t[l] - x_t[l] \right|^2 \right]$$

sous la contrainte s'une absence de biais.

Il sera préféré une MSE non conditionnelle pour des raisons de complexité : le premier filtre $\mathbf{f}_t^i$ est alors invariant dans le temps pour le bloc considéré du canal déterminé (le filtre étant calculé une fois et une seule pour le bloc b de données traité).
A partir du vecteur des estimées des chips à l'itération i :

$$\underline{\overline{\mathbf{x}}}^i[l] = \begin{bmatrix} \overline{x}_1^i[l + L_1] & \cdots & \overline{x}_t^i[l] & \cdots & \overline{x}_T^i[n - L_2 - P + 1] \end{bmatrix}^{\mathsf{T}} \in \mathbb{C}^{(L_W + P - 1)T}$$

on définit en 216 la version modifiée, comportant un 0 en position $L_1 T + t$, qui sert à la régénération de l'interférence MAI+ISI 216 pour le symbole $x_t$ [$l$] :

$$\underline{\overline{\mathbf{x}}}_t^i[l] = \begin{bmatrix} \overline{x}_1^i[l + L_1] & \cdots & \overline{x}_{t-1}^i[l] & 0 & \overline{x}_{t+1}^i[l] & \cdots & \overline{x}_T^i[l - L_2 - P + 1] \end{bmatrix}^{\mathsf{T}} \in \mathbb{C}^{(L_W + P - 1)T}$$

Une estimation d'interférences MAI+ISI est ainsi régénérée en 216, en multipliant ce dernier vecteur avec ladite matrice de Sylvester **H** (son calcul est décrit ci-dessus au chapitre 2.2 ou 2.3).

$$\underline{\mathbf{H}}\, \underline{\overline{\mathbf{x}}}_t^i[l]$$

Le premier filtre (de Wiener) 202 est appliqué au vecteur d'observation obtenu après soustraction en 201 de cette interférence MAI+ISI régénérée :

$$\underline{\overline{\mathbf{y}}}_t^i[l] = \underline{\mathbf{y}}[l] - \underline{\mathbf{H}}\,\underline{\overline{\mathbf{x}}}_t^i[l]$$

Ce premier filtre 202 minimise la MSE non conditionnelle sur l'estimation (biaisée) du chip $x_t$ [$l$] et peut être aisément dérivé à partir du théorème de la projection orthogonale :

$$\mathbf{f}_t^i = \mathbf{e}_t^\dagger \underline{\mathbf{H}}^\dagger \left[ \underline{\mathbf{H}} \underline{\Xi}_t^i \underline{\mathbf{H}}^\dagger + \sigma^2 \mathbf{I} \right]^{-1}$$

où $\mathbf{e}_t$ est le vecteur de dimension $(L_W + P\text{-}1)T$ ayant un 1 en position $L_1 T + t$ et des zéros partout ailleurs et où :

$$\underline{\Xi}_t^i \triangleq E\left\{ \left( \underline{\mathbf{x}}[l] - \underline{\overline{\mathbf{x}}}^i[t] \right) \left( \underline{\mathbf{x}}[l] - \underline{\overline{\mathbf{x}}}^i[t] \right)^\dagger \right\} \in \mathbb{C}^{(L_W + P-1)T \times (L_W + P-1)T}$$

$$\underline{\Xi}_t^i = \mathrm{diag}\left\{ \left( \sigma_x^2 - \sigma_{\overline{x}}^{i\,2} \right)\mathbf{I}, \ldots, \left( \sigma_x^2 - \sigma_{\overline{x}}^{i\,2} \right)\mathbf{I}, \sigma_x^2\mathbf{I}, \left( \sigma_x^2 - \sigma_{\overline{x}}^{i\,2} \right)\mathbf{I}, \ldots, \left( \sigma_x^2 - \sigma_{\overline{x}}^{i\,2} \right)\mathbf{I} \right\}$$

avec le terme $\sigma_x^2\mathbf{I}$ situé à la position $L_1T+t$ sur la diagonale et $\sigma_{\overline{x}}^{i\,2}$ évalué en utilisant l'estimateur consistant :

$$\sigma_{\overline{x}}^{i\,2} \approx \hat{\sigma}_{\overline{x}}^{i\,2} \triangleq \frac{1}{TL_X} \sum_{t=1}^{T} \sum_{l=0}^{L_X-1} \left| \overline{x}_t^i[l] \right|^2$$

Pour satisfaire la contrainte d'absence de biais, le filtre doit être multiplié à gauche par le facteur correctif :

$$\left\{ \mathbf{e}_t^\dagger \underline{\mathbf{H}}^\dagger \left[ \underline{\mathbf{H}} \underline{\Xi}_t^i \underline{\mathbf{H}}^\dagger + \sigma^2 \mathbf{I} \right]^{-1} \underline{\mathbf{H}} \mathbf{e}_t \right\}^{-1}$$

On obtient l'expression finale du filtre :

$$\mathbf{f}_t^i = \left\{ \mathbf{e}_t^\dagger \underline{\mathbf{H}}^\dagger \left[ \underline{\mathbf{H}} \underline{\Xi}_t^i \underline{\mathbf{H}}^\dagger + \sigma^2 \mathbf{I} \right]^{-1} \underline{\mathbf{H}} \mathbf{e}_t \right\}^{-1} \mathbf{e}_t^\dagger \underline{\mathbf{H}}^\dagger \left[ \underline{\mathbf{H}} \underline{\Xi}_t^i \underline{\mathbf{H}}^\dagger + \sigma^2 \mathbf{I} \right]^{-1}$$

Dans une variante, ce filtre peut être remplacé, totalement ou à partir d'une itération i donnée (i≥1), par sa version filtre adapté mono utilisateur (SUMF) donnée par

$$\mathbf{f}_t^i = \left\{ \mathbf{e}_t^\dagger \underline{\mathbf{H}}^\dagger \underline{\mathbf{H}} \mathbf{e}_t \right\}^{-1} \mathbf{e}_t^\dagger \underline{\mathbf{H}}^\dagger$$

:

L'évaluée du chip $x_t[l]$ correspond alors, à la sortie du premier filtre 202 à :

$$\hat{x}_t^i[l] = \mathbf{f}_t^i \left[ \underline{\mathbf{y}}[l] - \underline{\mathbf{H}} \underline{\overline{\mathbf{x}}}^i[l] \right] = x_t[l] + \zeta_t^i[l]$$

La variance de MAI+ISI résiduelle plus bruit est alors égale à :

$$\sigma_{\zeta_t}^{i\,2} = \sigma_x^2 \left[ \left( \mathbf{f}_t^i \underline{\mathbf{H}} \mathbf{e}_t \right)^{-1} - 1 \right]$$

et peut être évaluée en pratique par l'estimateur par :

$$\sigma_{\zeta_t}^{i2} \approx \hat{\sigma}_{\zeta_t}^{i2} \triangleq \frac{1}{L_X} \sum_{l=0}^{L_X-1} \left| \hat{x}_t^i \left[ l \right] \right|^2 - \sigma_x^2$$

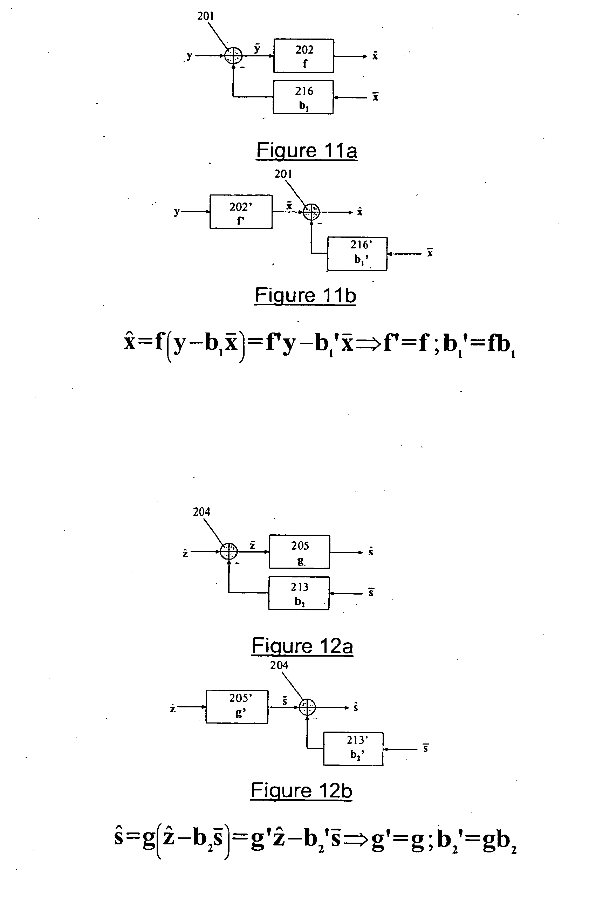

**Autre variante possible de l'égalisation :** En référence à la figure 11b est représentée une variante quant à la façon de mettre en oeuvre le premier filtrage 202' et la régénération d'interférences MAI+ISI 210', qui est à comparer au premier filtrage 202 et à la régénération d'interférences MAI+ISI 210 de la figure 11a (représentant ces deux étapes de détection comprises dans le schéma de la figure 9 ou 10).

En référence à la figure 11b, le premier filtrage 202' se fait ici en amont de la première soustraction 201 d'interférences MAI+ISI régénérées en 210', et non en aval comme c'est le cas en référence à la figure 11a.

Le premier filtre f' utilisé et la matrice de reconstruction d'interférences MAI+ISI notée ici $b_1$' utilisés peuvent se déduire de façon triviale du premier filtre f et de la matrice de reconstruction d'interférences MAI+ISI notée ici $b_1$ précédemment calculés (cf ci-dessus en référence aux figures 9 ou 10, et 11a), à partir de l'égalité suivante :

$$\hat{\mathbf{x}} = \mathbf{f} \left( \mathbf{y} - \mathbf{b_1} \overline{\mathbf{x}} \right) = \mathbf{f'} \mathbf{y} - \mathbf{b_1}' \overline{\mathbf{x}}$$

Pour en déduire alors que :

$$\mathbf{f'} = \mathbf{f} \; ; \mathbf{b_1}' = \mathbf{fb_1}$$

### 5.4. Modèle d'accès multiple gaussien équivalent et détection multiutilisateur

Les deux cas distingués à l'émission (i.e. étalement spatio-temporel (ou spatio-fréquentiel) , et étalement temporel (ou fréquentiel) ) donnent lieu à 1 ou T modèles d'accès multiple différents.

### 5.4.1 Etalement spatio-temporel (ou spatio-fréquentiel) à l'émission

En référence aux figures 9 et 10, les matrices de chips $\hat{\mathbf{X}}^{i(1)}$, ..., $\hat{\mathbf{X}}^{i(B)}$ sont ici regroupées en une unique matrice $\hat{\mathbf{X}}$, elle-même réorganisée, après traitement 203, en une unique matrice $\hat{\mathbf{Z}}^i$ de dimension $N \times L$ ; le traitement 203 correspondant à l'inverse du traitement 215 décrit dans **5.2.**

On obtient alors un modèle d'accès multiple (canonique) gaussien équivalent du type :

$$\hat{\mathbf{Z}}^i = \mathbf{X} + \Upsilon^i = \mathbf{WS} + \Upsilon^i$$

La matrice des chips observés est notée :

$$\hat{\mathbf{Z}}^i = \begin{bmatrix} \hat{\mathbf{z}}^i \left[ 0 \right] & \hat{\mathbf{z}}^i \left[ 1 \right] & \cdots & \hat{\mathbf{z}}^i \left[ L-1 \right] \end{bmatrix} = \begin{bmatrix} \hat{z}_1^i \left[ 0 \right] & \hat{z}_1^i \left[ 1 \right] & \cdots & \hat{z}_1^i \left[ L-1 \right] \\ \hat{z}_2^i \left[ 0 \right] & \hat{z}_2^i \left[ 1 \right] & \cdots & \hat{z}_2^i \left[ L-1 \right] \\ \vdots & \vdots & \ddots & \vdots \\ \hat{z}_N^i \left[ 0 \right] & \hat{z}_N^i \left[ 1 \right] & \cdots & \hat{z}_N^i \left[ L-1 \right] \end{bmatrix} \in \mathbb{C}^{N \times L}$$

La matrice des échantillons de bruit dans le temps est notée :

$$\Upsilon^i = \begin{bmatrix} \upsilon^i[0] & \upsilon^i[1] & \cdots & \upsilon^i[L-1] \end{bmatrix} = \begin{bmatrix} \upsilon_1^i[0] & \upsilon_1^i[1] & \cdots & \upsilon_1^i[L-1] \\ \upsilon_2^i[0] & \upsilon_2^i[1] & \cdots & \upsilon_2^i[L-1] \\ \vdots & \vdots & \ddots & \vdots \\ \upsilon_N^i[0] & \upsilon_N^i[1] & \cdots & \upsilon_N^i[L-1] \end{bmatrix} \in \mathbb{C}^{N \times L}$$

Pour chaque instant n, on pose :

$$\Xi_{\upsilon[n]}^i \triangleq E\left\{\upsilon^i[n]\upsilon^i[n]^\dagger\right\} = \begin{bmatrix} \sigma_{\upsilon_1[n]}^{i\,2} & & & \\ & \sigma_{\upsilon_1[n]}^{i\,2} & & \\ & & \ddots & \\ & & & \sigma_{\upsilon_N[n]}^{i\,2} \end{bmatrix} \in \mathbb{C}^{N \times N}$$

la matrice de covariance des vecteurs de MAI+ISI résiduelle plus bruit. Celle-ci est rendue diagonale soit grâce au desentrelacement chip inclus dans 203, soit au caractère apériodique de l'étalement. Ses éléments diagonaux sont déduits des variances précédemment estimées :

$$\hat{\sigma}_{\zeta_t}^{i\,2} \quad t = 1,...,T$$

Pour simplifier les traitements qui suivent (détection multiutilisateur MMSE), on peut supposer une variance des échantillons de bruit constante pour l'ensemble du système :

$$\sigma_{\upsilon_l[n]}^{i\,2} \approx \hat{\sigma}_{\upsilon}^{i\,2} = \frac{1}{NL} \sum_{n=0}^{L-1} \sum_{l=1}^{N} \left|\hat{z}_l^i[n]\right|^2 - \sigma_z^2 \quad \forall l = 1,...,N$$

On élimine alors la dépendance temporelle :

$$\Xi_{\upsilon[n]}^i = \Xi_{\upsilon}^i = \sigma_{\upsilon}^{i\,2}\mathbf{I} \quad \forall n = 0,...,L-1$$

### 5.4.1.1 Etalement spatio-temporel (spatio-fréquentiel) périodique à l'émission

Comme vu précédemment, lorsque l'étalement est périodique, un entrelaceur chip (110) a été mis en oeuvre à l'émission, si bien que le traitement 203 inclut un désentrelacement chip en référence à la figure 9.

### Variante 1 : Régime surchargé : détection multiutilisateur MMSE

On remplace ici la détection optimale des symboles $s_k[n]$ (au sens du critère MAP) par une évaluation MMSE non biaisée, dont la complexité est polynomiale en les paramètres du système et non exponentielle. A chaque itération i, pour chaque utilisateur potentiel k, on calcule en 204 un deuxième filtre $\mathbf{g}_{k,n}^i \in \mathbb{C}^N$ qui, sur la base d'une observation actualisée (portant sur la colonne indicée n du modèle précédent), supprime les interférences MUI corrompant le symbole $s_k[n]$ et produit une évaluation $\hat{s}_k^i[n]$ des données modulées (ou symboles) émis en minimisant l'erreur quadratique moyenne (MSE) :

$$E\left[ s_k\left[ n \right] - \hat{s}_k^{\,i}\left[ n \right] \right]$$

sous la contrainte d'une absence de biais. Il sera préféré une MSE non conditionnelle pour des raisons de complexité : le deuxième filtre $\mathbf{g}_k^i$ est alors invariant dans le temps pour le bloc considéré du canal déterminé (i.e. calculé une fois et une seule sur l'ensemble du bloc traité).

A partir du vecteur des estimées des symboles à l'itération i :

$$\overline{\mathbf{s}}^i\left[ n \right] = \left[ \overline{s}_1^{\,i}\left[ n \right] \quad \overline{s}_2^{\,i}\left[ n \right] \quad \cdots \quad \overline{s}_K^{\,i}\left[ n \right] \right]^{\mathsf{T}} \in \mathbb{C}^K$$

il est possible de définir en 213 la version modifiée, comportant un 0 en position k, qui sert à la régénération 213 de l'interférence MUI pour le symbole $s_k\left[ n \right]$ :

$$\overline{\mathbf{s}}_k^{\,i}\left[ n \right] = \left[ \overline{s}_1^{\,i}\left[ n \right] \quad \cdots \quad \overline{s}_{k-1}^{\,i}\left[ n \right] \quad 0 \quad \overline{s}_{k+1}^{\,i}\left[ n \right] \quad \cdots \quad \overline{s}_K^{\,i}\left[ n \right] \right]^{\mathsf{T}} \in \mathbb{C}^K$$

Une estimation d'interférences MUI est ainsi régénérée en 213, en multipliant ce dernier vecteur avec la matrice d'étalement $\mathbf{W}$ utilisée à l'émission :

$$\mathbf{W}\,\overline{\mathbf{s}}_k^{\,i}\left[ n \right]$$

Le deuxième filtre (de Wiener, biaisé) est alors appliqué en 205 au vecteur d'observation obtenu après soustraction 204 de cette interférence MUI régénérée :

$$\tilde{\mathbf{z}}_k^{\,i}\left[ n \right] = \hat{\mathbf{z}}^i\left[ n \right] - \mathbf{W}\,\overline{\mathbf{s}}_k^{\,i}\left[ n \right]$$

Ce deuxième filtre 205 minimise la MSE non conditionnelle sur l'estimation du symbole $s_k\left[ n \right]$ et peut être aisément dérivé à partir du théorème de la projection orthogonale :

$$\mathbf{g}_k^i = \mathbf{e}_k^{\dagger}\mathbf{W}^{\dagger}\left[ \mathbf{W}\Xi_k^i\mathbf{W}^{\dagger} + \sigma_\nu^{i\,2}\mathbf{I} \right]^{-1}$$

où $\mathbf{e}_k$ est le vecteur de dimension K ayant un 1 en position $k$ et des zéros partout ailleurs et où :

$$\Xi_k^i \triangleq E\left\{ \left( \mathbf{s}\left[ n \right] - \overline{\mathbf{s}}_k^{\,i}\left[ n \right] \right)\left( \mathbf{s}\left[ n \right] - \overline{\mathbf{s}}_k^{\,i}\left[ n \right] \right)^{\dagger} \right\} \in \mathbb{C}^{K\times K}$$

$$\Xi_k^i = \mathrm{diag}\left\{ \sigma_s^2 - \sigma_{\overline{s}_k}^{i\,2}, \ldots, \sigma_s^2 - \sigma_{\overline{s}_k}^{i\,2}, \sigma_s^2, \sigma_s^2 - \sigma_{\overline{s}_k}^{i\,2}, \ldots, \sigma_s^2 - \sigma_{\overline{s}_k}^{i\,2} \right\}$$

avec $\sigma_s^2$ situé à la position k sur la diagonale et $\sigma_{\overline{s}}^{i\,2}$ évalué en utilisant l'estimateur consistant :

$$\sigma_{\bar{s}_k}^{i\,2} \approx \hat{\sigma}_{\bar{s}_k}^{i\,2} \triangleq \frac{1}{L} \sum_{n=0}^{L-1} \left| \bar{s}_k^i [n] \right|^2$$

Pour satisfaire la contrainte d'absence de biais, le deuxième filtre doit être multiplié à gauche par le facteur correctif :

$$\left\{ \mathbf{e}_k^\dagger \mathbf{W}^\dagger \left[ \mathbf{W}\Xi_k^i \mathbf{W}^\dagger + \sigma_\upsilon^{i\,2} \mathbf{I} \right]^{-1} \mathbf{W}\mathbf{e}_k \right\}^{-1}$$

On obtient alors l'expression finale du deuxième filtre :

$$\mathbf{g}_k^i = \left\{ \mathbf{e}_k^\dagger \mathbf{W}^\dagger \left[ \mathbf{W}\Xi_k^i \mathbf{W}^\dagger + \sigma_\upsilon^{i\,2} \mathbf{I} \right]^{-1} \mathbf{W}\mathbf{e}_k \right\}^{-1} \mathbf{e}_k^\dagger \mathbf{W}^\dagger \left[ \mathbf{W}\Xi_k^i \mathbf{W}^\dagger + \sigma_\upsilon^{i\,2} \mathbf{I} \right]^{-1}$$

L'évaluée du symbole $s_k[n]$ correspond à la sortie du deuxième filtre 205 à :

$$\hat{s}_k^i [n] = \mathbf{g}_k^i \left[ \hat{\mathbf{z}}^i [n] - \mathbf{W}\bar{\mathbf{s}}_k^i [n] \right] = s_k [n] + \xi_k^i [n]$$

La variance du terme d'interférences MUI résiduelles plus bruit $\xi_k^i [n]$ peut être évaluée via l'estimateur consistant en :

$$\sigma_{\xi_k}^{i\,2} \approx \hat{\sigma}_{\xi_k}^{i\,2} \triangleq \frac{1}{L} \sum_{n=0}^{L-1} \left| \hat{s}_k^i [n] \right|^2 - \sigma_s^2$$

**Variante 2 : Régime surchargé : détection SUMF (« Single User Matched-Filter »)**

Dans une version simplifiée, on peut remplacer en 205 le deuxième filtre MMSE à partir d'une itération quelconque i par un deuxième filtre SUMF :

$$\mathbf{g}_k^i = \left\{ \mathbf{e}_k^\dagger \mathbf{W}^\dagger \mathbf{W}\mathbf{e}_k \right\}^{-1} \mathbf{e}_k^\dagger \mathbf{W}^\dagger$$

On obtient l'évaluée :

$$\hat{s}_k^i [n] = \mathbf{g}_k^i \left[ \hat{\mathbf{z}}^i [n] - \mathbf{W}\bar{\mathbf{s}}_k^i [n] \right]$$

Cette approche permet d'éviter le calcul des matrices inverses de dimension N x N.

**Variante 3 : Régime non surchargé**

Dans le cas non surchargé, on a :

$$\mathbf{W}^\dagger \mathbf{W} = \mathbf{I}$$

La détection se résume à appliquer en 205 le deuxième filtre $\mathbf{g}_k^i = \mathbf{e}_k^\dagger \mathbf{W}^\dagger$ au vecteur d'observation.

On obtient alors directement l'évaluée par :

$$\hat{s}_k^i[n] = \mathbf{e}_k^\dagger \mathbf{W}^\dagger \hat{\mathbf{z}}^i[n]$$

### 5.4.1.2 Etalement spatio-temporel (spatio-freguentiel) apériodique

Dans ce cas, le traitement 203 peut ou non inclure un desentrelacement chip en référence aux figures 9 et 10. Le modèle d'accès multiple (canonique) gaussien équivalent s'écrit maintenant :

$$\hat{\mathbf{z}}^i[n] = \mathbf{W}_n \mathbf{s}[n] + \mathbf{v}^i[n]$$

Seules les détections du type SUMF sont de complexité raisonnable dans le cas apériodique, et seront donc préférentiellement mis en oeuvre.

### Variante 1 : Regime surchargé

Le filtre a alors l'expression suivante :

$$\mathbf{g}_k^i = \left\{ \mathbf{e}_k^\dagger \mathbf{W}_n^\dagger \mathbf{W}_n \mathbf{e}_k \right\}^{-1} \mathbf{e}_k^\dagger \mathbf{W}_n^\dagger.$$

### Variante 2: Regime non surchargé

Le filtre a alors l'expression suivante :

$$\mathbf{g}_k^i = \mathbf{e}_k^\dagger \mathbf{W}_n^\dagger$$

### 5.4.2. Etalement temporel (ou fréquentiel) à l'émission

Les matrices de chips $\hat{\mathbf{X}}^{i(1)},...,\hat{\mathbf{X}}^{i(B)}$ sont regroupées en une unique matrice $\hat{\mathbf{X}}$. Après le traitement 203, et en référence aux figures 9 et 10, $\hat{\mathbf{X}}$ est réorganisée en T matrices $\hat{\mathbf{Z}}^{i(1)},..., \hat{\mathbf{Z}}^{i(T)}$ de dimension $S_F \times L$ correspondant à T modèles d'accès multiple (canoniques) gaussiens équivalents indépendants du type :

$$\hat{\mathbf{Z}}^{i(t)} = \mathbf{Z}^{(t)} + \Upsilon^{i(t)} = \mathbf{W}^{(t)}\mathbf{S}^{(t)} + \Upsilon^{i(t)}$$

La matrice des chips observés est notée :

$$\hat{\mathbf{Z}}^{i(t)} = \begin{bmatrix} \hat{\mathbf{z}}^{i(t)}[0] & \hat{\mathbf{z}}^{i(t)}[1] & \cdots & \hat{\mathbf{z}}^{i(t)}[L-1] \end{bmatrix} = \begin{bmatrix} \hat{z}_1^{i(t)}[0] & \hat{z}_1^{i(t)}[1] & \cdots & \hat{z}_1^{i(t)}[L-1] \\ \hat{z}_2^{i(t)}[0] & \hat{z}_2^{i(t)}[1] & \cdots & \hat{z}_2^{i(t)}[L-1] \\ \vdots & \vdots & \ddots & \vdots \\ \hat{z}_{S_F}^{i(t)}[0] & \hat{z}_{S_F}^{i(t)}[1] & \cdots & \hat{z}_{S_F}^{i(t)}[L-1] \end{bmatrix} \in \mathbb{C}^{S_F \times L}$$

La matrice des échantillons de bruit décorrélés dans le temps :

$$\Upsilon^{i(t)} = \begin{bmatrix} \upsilon^{i(t)}[0] & \upsilon^{i(t)}[1] & \cdots & \upsilon^{i(t)}[L-1] \end{bmatrix} = \begin{bmatrix} \upsilon_1^{i(t)}[0] & \upsilon_1^{i(t)}[1] & \cdots & \upsilon_1^{i(t)}[L-1] \\ \upsilon_2^{i(t)}[0] & \upsilon_2^{i(t)}[1] & \cdots & \upsilon_2^{i(t)}[L-1] \\ \vdots & \vdots & \ddots & \vdots \\ \upsilon_{S_F}^{i(t)}[0] & \upsilon_{S_F}^{i(t)}[1] & \cdots & \upsilon_{S_F}^{i(t)}[L-1] \end{bmatrix} \in \mathbb{C}^{S_F \times L}$$

Pour chaque instant, on pose :

$$\Xi_{\upsilon^{(t)}[n]}^{i} \triangleq E\left\{\upsilon^{i(t)}[n]\upsilon^{i(t)}[n]^{\dagger}\right\} = \begin{bmatrix} \sigma_{\upsilon_1^{(t)}[n]}^{i\,2} & & & \\ & \sigma_{\upsilon_2^{(t)}[n]}^{i\,2} & & \\ & & \ddots & \\ & & & \sigma_{\upsilon_{S_F}^{(t)}[n]}^{i\,2} \end{bmatrix} \in \mathbb{C}^{S_F \times S_F}$$

la matrice de covariance des vecteurs de MAI+ISI résiduelle plus bruit. Celle-ci est rendue diagonale soit par le désentrelacement chip inclus dans le traitement 203 soit par le caractère apériodique de l'étalement. Ses éléments diagonaux sont déduits des variances précédemment estimées

$$\hat{\sigma}_{\zeta_t}^{i\,2} \quad t = 1,...,T$$

sur les différents blocs traités.

Pour simplifier les traitements qui suivent (détection multiutilisateur MMSE), on peut supposer une variance des échantillons de bruit constante pour l'ensemble du système :

$$\sigma_{\upsilon_i^{(t)}[n]}^{i\,2} \approx \hat{\sigma}_{\upsilon}^{i(t)2} = \frac{1}{SF\ L}\sum_{n=0}^{L-1}\sum_{l=1}^{SF}\left|\hat{z}_l^{i(t)}[n]\right|^2 - \sigma_z^2 \quad \forall l = 1,...,N$$

On élimine alors la dépendance temporelle :

$$\Xi_{\upsilon^{(t)}[n]}^{i} = \Xi_{\upsilon}^{i(t)} = \sigma_{\upsilon}^{i(t)2}\mathbf{I} \quad \forall n = 0,...,L-1$$

Les calculs des filtres $\mathbf{g}_u^{i(t)}$ par modèle d'accès multiple étant similaires au cas précédent, ceux-ci ne seront pas explicités.

### 5.4.2.1 Etalement temporel (ou fréquentiel) périodique à l'émission

Comme vu précédemment, lorsque l'étalement est périodique, un entrelaceur chip (110) a été mis en oeuvre à l'émission, si bien que le traitement 203 inclut un désentrelacement chip en référence à la figure 9.

### Variante 1 : Régime surchargé : détection multiutilisateur MMSE

Le filtre a alors l'expression suivante :

$$\mathbf{g}_u^{i(t)} = \left\{ \mathbf{e}_u^\dagger \mathbf{W}^{(t)\dagger} \left[ \mathbf{W}^{(t)} \boldsymbol{\Xi}_u^i \mathbf{W}^{(t)\dagger} + \sigma_v^{i\,2} \mathbf{I} \right]^{-1} \mathbf{W}^{(t)} \mathbf{e}_u \right\}^{-1} \mathbf{e}_u^\dagger \mathbf{W}^{(t)\dagger} \left[ \mathbf{W}^{(t)} \boldsymbol{\Xi}_u^i \mathbf{W}^{(t)\dagger} + \sigma_v^{i\,2} \mathbf{I} \right]^{-1}$$

**Variante 2 : Régime surchargé : détection SUMF (« Single User Matched-Filter »)**

A partir d'une itération i quelconque, le filtre MMSE peut être remplacé par sa version sous optimale SUMF

$$\mathbf{g}_u^{i(t)} = \left\{ \mathbf{e}_u^\dagger \mathbf{W}^{(t)\dagger} \mathbf{W}^{(t)} \mathbf{e}_u \right\}^{-1} \mathbf{e}_u^\dagger \mathbf{W}^{(t)\dagger}$$

:

**Variante 3 : Régime non surchargé**

Le filtre a alors l'expression suivante :

$$\mathbf{g}_u^i = \mathbf{e}_u^\dagger \mathbf{W}^{(t)\dagger}$$

**5.4.2.2 Etalement temporel (ou fréquentiel) périodique apériodique à l'émission**

Dans ce cas, le traitement 203 peut ou non inclure un désentrelacement chip en référence aux figures 9 et 10. Les T modèles d'accès multiple (canonique) gaussien équivalent s'écrivent maintenant :

$$\hat{\mathbf{z}}^{i(t)}\left[ n \right] = \mathbf{W}_n^{(t)} \mathbf{s}^{(t)}\left[ n \right] + \mathbf{v}^{i(t)}\left[ n \right]$$

Seules les détections du type SUMF sont de complexité raisonnable dans le cas apériodique.

**Variante 1: Régime surchargé**

Le filtre a alors l'expression suivante :

$$\mathbf{g}_u^{i(t)} = \left\{ \mathbf{e}_u^\dagger \mathbf{W}_n^{(t)\dagger} \mathbf{W}_n^{(t)} \mathbf{e}_u \right\}^{-1} \mathbf{e}_k^\dagger \mathbf{W}_n^{(t)\dagger}$$

**Variante 2: Régime non surchargé**

Le filtre a alors l'expression suivante :

$$\mathbf{g}_u^{i(t)} = \mathbf{e}_u^\dagger \mathbf{W}_n^{(t)\dagger}$$

**Autre variante possible de l'égalisation** : Quels que soient les cas déclinés aux chapitres **5.4.1** et **5.4.2,** il existe aussi une variante quant à la façon de mettre en oeuvre le deuxième filtrage 205' et la régénération d'interférences MUI 213' (en référence à la figure 12b), qui est à comparer au deuxième filtrage 205 et à la régénération d'interférences MUI 213 de la figure 12a (représentant ces deux étapes de détection comprise dans le schéma de la figure 9 ou 10).
En référence à la figure 12b, le deuxième filtrage 205' se fait ici en amont de la deuxième soustraction 204 d'interférences régénérées en 213', et non en aval comme c'est le cas en référence à la figure 12a.
Le deuxième filtre g' utilisé et la matrice de reconstruction $b_2$' d'interférences MUI utilisés peuvent se déduire de façon triviale du deuxième filtre g et de la matrice de reconstruction $b_2$ d'interférences MUI précédemment calculés (cf ci-dessus en référence aux figures 9 ou 10, et 12a), à partir de l'égalité suivante :

$$\hat{\mathbf{s}} = \mathbf{g}\left(\hat{\mathbf{z}} - \mathbf{b}_2 \overline{\mathbf{s}}\right) = \mathbf{g'}\hat{\mathbf{z}} - \mathbf{b}_2'\overline{\mathbf{s}}$$

Pour en déduire alors :

$$\mathbf{g'} = \mathbf{g} \; ; \mathbf{b}_2' = \mathbf{g}\mathbf{b}_2$$

### 5.5. Echange d'information probabiliste avec le décodeur de canal

Sur la base des sorties du deuxième filtrage linéaire 205 à K filtres, q rapport logarithmique de probabilité a posteriori (APP) sont calculés en 206 pour chaque symbole à chaque instant $n = 0, ..., L$-1, pour chaque utilisateur $k = 1, ..., K$. Ces quantités probabilistes sont définies comme :

$$\lambda_{k,j}^{i}[n] \triangleq \ln \frac{\Pr\left[d_{k,j}[n] = 1 \middle| \hat{s}_k^i[n]\right]}{\Pr\left[d_{k,j}[n] = 0 \middle| \hat{s}_k^i[n]\right]}$$

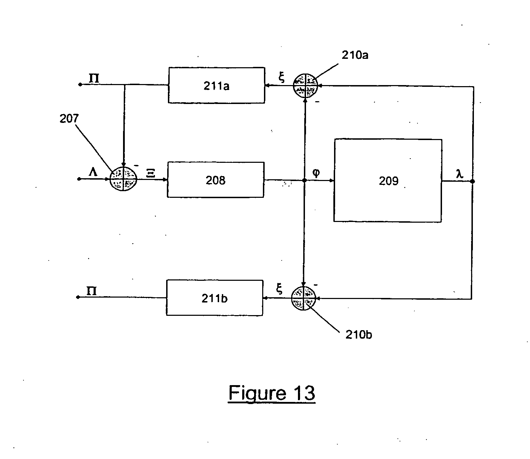

et sont référencés A sur les figures 9, 10 et 13 :
Soit encore :

$$\lambda_{k,j}^{i}[n] = \ln \frac{\sum_{\mathbf{d} \in \aleph_j^{(1)}} \Pr\left[\mathbf{d}_k[n] = \mathbf{d} \middle| \hat{s}_k^i[n]\right]}{\sum_{\mathbf{d} \in \aleph_j^{(0)}} \Pr\left[\mathbf{d}_k[n] = \mathbf{d} \middle| \hat{s}_k^i[n]\right]}$$

où l'on introduit :

$$\aleph_j^{(\varepsilon)} = \left\{\mathbf{d} \in F_2^q \middle| d_j = \varepsilon\right\}$$

Le développement du numérateur et du dénominateur donne :

$$\lambda_{k,j}^{i}[n] = \ln \frac{\sum_{\mathbf{d} \in A_j^{(1)}} p\left(\hat{s}_k^i[n] \middle| s_k[n] = \mu(\mathbf{d})\right) \Pr^i\left[\mathbf{d}_k[n] = \mathbf{d}\right]}{\sum_{\mathbf{d} \in A_j^{(0)}} p\left(\hat{s}_k^i[n] \middle| s_k[n] = \mu(\mathbf{d})\right) \Pr^i\left[\mathbf{d}_k[n] = \mathbf{d}\right]}$$

Les vraisemblances s'expriment comme :

$$p\left(\hat{s}_k^i[n] \middle| s_k[n] = \mu(\mathbf{d})\right) \propto \exp\left(-\frac{\left|\hat{s}_k^i[n] - \mu(\mathbf{d})\right|^2}{\hat{\sigma}_{\xi_k}^{i\,2}}\right)$$

A chaque itération i, une information a priori sur les bits des différents symboles, en provenance du ou des décodeurs de canal 209, est disponible et exploitable sous la forme de rapports logarithmiques de probabilité a priori, préalablement introduits et dont on rappelle l'expression :

$$\pi_{k,j}^{i}\left[n\right] \triangleq \ln \frac{\mathrm{Pr}^{i}\left[d_{k,j}\left[n\right]=1\right]}{\mathrm{Pr}^{i}\left[d_{k,j}\left[n\right]=0\right]}$$

En supposant un entrelacement spatio-temporel de profondeur suffisamment grande, on peut écrire :

$$\mathrm{Pr}^{i}\left[\mathbf{d}_{k}\left[n\right]=\mathbf{d}\right] \approx \prod_{j=1}^{q}\mathrm{Pr}^{i}\left[d_{k,j}\left[n\right]=d_{j}\right] \propto \prod_{j=1}^{q}\left\{1-\left(2d_{j}-1\right)\tanh\left(\frac{\pi_{k,j}\left[n\right]}{2}\right)\right\}$$

L'information extrinsèque sur chaque bit délivrée par les démodulateurs 206 à sortie pondérée à destination du décodeur de canal 209 est alors trouvée en 207 par :

$$\xi_{k,j}^{i}\left[n\right] \triangleq \lambda_{k,j}^{i}\left[n\right] - \pi_{k,j}^{i}\left[n\right]$$

Tous les rapports logarithmiques d'information extrinsèque sur bits sont ensuite collectés pour tous les blocs, puis proprement multiplexés et désentrelacés au niveau binaire en 208, à destination du décodeur de canal 209.

Le décodeur 209 observe un unique vecteur $\varphi^{i} \in \boldsymbol{\varphi}^{i} \in \mathbb{R}^{N_{o}}$, composé de $N_{O}$ rapports logarithmiques de probabilité intrinsèque sur bit (un par bit du mot de code v). Le décodage 209 utilise alors un algorithme, tel qu'un algorithme de Viterbi assorti souple, pour délivrer le logarithme $\lambda$ d'un rapport de probabilités d'informations a posteriori sur bits des données modulées (ou symboles) émises.

Cette algorithmique $\lambda$ est la base sur laquelle sont calculés en 210a et en 210b les rapports logarithmiques d'information extrinsèque sur bit après décodage, formellement définis $\forall l = 1, ..., N_{O}$ comme :

$$\xi_{l}^{i} \triangleq \ln \frac{\mathrm{Pr}^{i}\left[v_{l}=1\Big|C_{o},\boldsymbol{\varphi}^{i}/\left\{\varphi_{l}^{i}\right\}\right]}{\mathrm{Pr}^{i}\left[v_{l}=0\Big|C_{o},\boldsymbol{\varphi}^{i}/\left\{\varphi_{l}^{i}\right\}\right]}$$

Les rapports logarithmiques d'information extrinsèque sur bits de mot de code $\left\{\xi_{l}^{i}\right\}$ calculés à l'itération i sont assimilés, après entrelacement binaire et démultiplexage 211a et 211b aux rapports logarithmiques de probabilité a priori sur bits de symboles $\left\{\pi_{k,j}^{i+1}\left[n\right]\right\}$ à l'itération suivante.

La réception selon l'invention concerne non seulement un procédé permettant sa mise en oeuvre, mais aussi le système apte à l'exécuter, ainsi que tout le système de transmission intégrant ce système de réception.

**Revendications**

1.  Procédé de réception pour communication sur canal sélectif en fréquence à plusieurs antennes en émission et à plusieurs antennes en réception, **caractérisé en ce que** la réception est apte à traiter des données reçues par les antennes de réception qui avaient été, à leur émission, successivement :

    (A) modulées (107) sur un nombre K de voies, K étant strictement supérieur au nombre T d'antennes d'émission ;
    (B) étalées (108) avec une matrice d'étalement périodique (**W**) ou apériodique (**W**ₙ) de dimensions NxK où N est strictement supérieur à T, sur les vecteurs de dimension K des données modulées;
    (C) traitées pour être transmises à partir des T antennes d'émission ;

et **en ce que** la réception met en oeuvre itérativement à cet effet :

- un premier filtrage au moyen de T filtres linéaires (202, 202') apte à traiter les données reçues, le cas échéant après soustraction (201) d'une estimation d'interférences inter-antennes (MAI) et inter-données (ISI), pour générer une évaluation des chips émis ($\hat{x}$) après l'étalement de l'étape (B) ;
- avant ou après ledit premier filtrage, une première soustraction d'interférences (201) qui utilise une estimation d'interférences MAI et ISI préalablement régénérée à partir d'informations calculées sur la base d'une évaluation ($\hat{s}$) des données modulées émises générées par un précédent filtrage ;
- un traitement (203) inverse de celui de l'étape (C) d'émission, mettant en oeuvre une réorganisation des chips évalués ($\hat{x}$) précédemment;
- un deuxième filtrage au moyen de K filtres linéaires (205, 205') apte à traiter l'évaluation des chips émis ($\hat{x}$) ainsi obtenue, le cas échéant après soustraction d'une estimation d'interférences inter-utilisateurs (MUI), pour générer une évaluation ($\hat{s}$) des données modulées émises avant l'étalement de l'étape (B) ;
- avant ou après ledit deuxième filtrage, une deuxième soustraction d'interférences (204) qui utilise une estimation d'interférences MUI préalablement régénérée à partir d'informations calculées sur la base d'une évaluation ($\hat{s}$) des données modulées émises générées par un précédent filtrage ;
- un traitement générant une estimation d'interférences MAI+ISI et une estimation d'interférences MUI sur les données reçues, à partir d'informations calculées sur la base de ladite évaluation ($\hat{s}$) des données modulées émises, l'estimation d'interférences MAI+ISI et l'estimation MUI étant alors, respectivement, envoyées récursivement à la prochaine première soustraction (201) et à la prochaine deuxième soustraction (204).

2. Procédé de réception selon la revendication 1, **caractérisé en ce que** les T premiers filtres sont dérivés selon le critère de minimisation de l'erreur quadratique moyenne dite non conditionnelle, les T premiers filtres étant invariant dans le temps pour un canal donné.

3. Procédé de réception selon l'une des revendications 1 et 2, **caractérisé en ce que** les T premiers filtres sont des filtres adaptés (communément appelés SUMF pour « Single User Matched-Filter »).

4. Procédé de réception selon la revendication 1, **caractérisé en ce que** les T premiers filtres sont d'abord dérivés selon le critère de minimisation de l'erreur quadratique moyenne (MMSE), puis deviennent des filtres adaptés (communément appelé SUMF pour « Single User Matched-Filter ») à partir d'une itération donnée.

5. Procédé de réception selon l'une des revendications 1 à 4. **caractérisé en ce que** l'étalement de l'étape (B) de l'émission a été effectué de façon périodique, **en ce que** l'étape (C) comprenait un entrelacement par chip, et **en ce que** les deuxièmes K filtres sont dérivés selon le critère de minimisation de l'erreur quadratique moyenne dite non conditionnelle, les K deuxièmes filtres étant invariant dans le temps pour un canal donné.

6. Procédé de réception selon l'une des revendications 1 à 4, **caractérisé en ce que** les K deuxièmes filtres sont des filtres adaptés (communément appelés SUMF pour « Single User Matched-Filter »).

7. Procédé de réception selon l'une des revendications 1 à 4, **caractérisé en ce que** l'étalement de l'étape (B) de l'émission a été effectué de façon périodique, **en ce que** l'étape (C) comprenait un entrelacement par chip, et **en ce que** les K deuxièmes filtres sont d'abord dérivés selon le critère de minimisation de l'erreur quadratique moyenne dite non conditionnelle (les K deuxièmes filtres étant ainsi invariants dans le temps pour un canal donné), puis deviennent des K filtres adaptés (communément appelé SUMF pour « Single User Matched-Filter ») à partir d'une itération donnée.

8. Procédé de réception selon l'une des revendications précédentes, **caractérisé en ce que** les T premiers filtres prennent notamment en compte la diversité spatiale de la pluralité d'antennes en réception en maximisant le rapport signal-sur-bruit (« SNR ») en sortie du filtrage (202).

9. Procédé de réception selon l'une des revendications précédentes, **caractérisé en ce que** le premier et/ou le deuxième filtrage est calculé à partir de fenêtres glissantes.

10. Procédé de réception selon l'une des revendications précédentes, **caractérisé en ce que** l'étalement de l'étape (B) de l'émission a été fait de manière apériodique et le traitement de l'étape (C) de l'émission comprenait un multiplexage sur les T antennes d'émission sans entrelacement, et **en ce que** ledit traitement inverse (203) en réception comprend alors un démultiplexage sur N voies.

**11.** Procédé de réception selon l'une des revendications 1 à 9, **caractérisé en ce que** le traitement de l'étape (C) de l'émission comprenait un multiplexage sur une voie, un entrelacement par chip puis un démultiplexage sur les T antennes d'émission, et **en ce que** ledit traitement inverse en réception comprend alors un multiplexage sur une voie, un désentrelacement par chip, puis un démultiplexage sur N voies.

**12.** Procédé de réception selon l'une des revendications précédentes, **caractérisé en ce que** les données à l'émission avaient été, avant l'étape (A), codées, et **en ce que**, en réception, ledit traitement générant des estimations d'interférences met en oeuvre :

> • un traitement à sortie pondérée (206) traitant l'évaluation ($\hat{s}$) des données modulées émises et générant une information probabiliste sur bit de donnée modulée exploitable par un décodage;
> • au moins un décodage (209) générant une quantité probabiliste ($\lambda$) à partir de ladite information probabiliste ;
> • une régénération d'interférences MUI (213, 213') générant une estimation d'interférences MUI sur la base de cette quantité probabiliste ($\lambda$), cette estimation d'interférences étant alors envoyée récursivement à la prochaine deuxième étape de soustraction (204) ;
> • une régénération d'interférences MAI+ISI (216, 216'), générant une estimation d'interférences MAI+ISI sur la base de la quantité probabiliste ($\lambda$), et par l'intermédiaire d'un traitement conforme (215) à celui de l'étape (C), cette estimation d'interférences étant alors envoyée récursivement à la prochaine première étape de soustraction (201).

**13.** Procédé de réception selon la revendication 12, **caractérisé en ce que** les régénérations d'interférences MAI+ISI et MUI génèrent des estimations d'interférences à partir d'une estimée ($\overline{S}$ des données modulées émises, estimée ($\overline{S}$) calculée (212) au sens du critère de minimisation de l'erreur quadratique moyenne (MMSE) sur la base d'une information dite extrinsèque ($\xi$) fonction des bits émis précédemment disponibles en sortie du décodage (209).

**14.** Procédé de réception selon l'une des revendications 1 à 11, **caractérisé en ce que** les données à l'émission avaient été, avant l'étape (A), codées et entrelacées, et **en ce que**, en réception, ledit traitement générant des estimations d'interférences met en oeuvre :

> • un traitement à sortie pondérée (206), à partir de l'évaluation des données modulées émises ($\hat{S}$) et de statistiques de décodage (**II**) issues d'un décodage (209), générant une statistique ($\Lambda$) par bit de donnée modulée ;
> • un désentrelacement (208) au niveau binaire de statistiques extrinsèques ($\Xi$) trouvées à partir de la quantité probabiliste ($\Lambda$) précédemment générées;
> • au moins un décodage (209) à entrée et à sortie pondérées, à partir des données ainsi désentrelacées ($\varphi$), et produisant une quantité probabiliste ($\lambda$) sur l'ensemble des bits ;
> • un entrelacement (211a-211b) au niveau binaire de statistiques extrinsèques ($\xi$) trouvées à partir de la quantité probabiliste ($\lambda$), nouvelles statistiques ainsi entrelacées (**II**) qui sont ensuite envoyées récursivement à l'étape suivante de traitement à sortie pondérée (206) ;
> • une régénération d'interférences MUI (210,210') générant une estimation d'interférences MUI sur la base d'une estimée ($\overline{S}$) des données modulées émises, qui ont été calculées (212) au sens du critère de minimisation de l'erreur quadratique moyenne (MMSE) à partir desdites nouvelles statistiques entrelacées (II), cette estimation d'interférences MUI étant alors envoyée récursivement à la prochaine deuxième soustraction (204) ;
> • une régénération d'interférences MAI+ISI (216, 216') générant une estimation d'interférences MAI+ISI sur la base de la même estimée ($\overline{S}$) des données modulées émises par l'intermédiaire d'un traitement (215) conforme à celui de l'étape (C), cette estimation d'interférences étant alors envoyée récursivement à la prochaine première soustraction (201).

**15.** Procédé de réception selon l'une des revendications 12 à 14, **caractérisé en ce que** ladite quantité probabiliste ($\lambda$) en sortie de décodage (209) est le logarithme d'un rapport de probabilités d'informations sur bits a posteriori de données modulées.

**16.** Procédé de réception selon la revendication précédente, **caractérisé en ce que** le décodage (209) calcule ladite quantité probabiliste ($\lambda$) au moyen d'un algorithme de Viterbi à entrée et à sortie pondérées.

**17.** Système de transmission, **caractérisé en ce qu'**il comprend :

> - un système d'émission comprenant une pluralité d'antennes d'émission et apte à moduler sur un nombre K de voies, K étant strictement supérieur au nombre T d'antennes d'émission ; à étaler avec une matrice d'étalement périodique (**W**) ou apériodique (**W**$_n$) de dimensions NxK où N est strictement supérieur à T, sur les vecteurs de dimension K des données modulées ; et à réaliser un traitement de données pour la transmission à partir des T antennes d'émission ;

- un canal de transmission sélectif en fréquence ;
- un système de réception comprenant une pluralité d'antennes de réception et apte à mettre en oeuvre un procédé de réception selon l'une des revendications précédentes.

**18.** Système de réception pour communication sur canal sélectif en fréquence à plusieurs antennes en émission et à plusieurs antennes en réception, **caractérisé en ce que** le système est apte à traiter des données reçues par les antennes de réception qui avaient été, à leur émission, successivement :

(A) modulées sur un nombre K de voies, K étant strictement supérieur au nombre T d'antennes d'émission ;
(B) étalées, en fréquence ou en temps, avec une matrice d'étalement périodique (**W**) ou apériodique (**W**$_n$) de dimensions NxK où N est strictement supérieur à T, sur les vecteurs de dimension K des données modulées;
(C) traitées pour être transmises à partir des T antennes d'émission ; et **en ce que** le système comprend à cet effet :

- T premiers filtres linéaires (202, 202') apte à traiter les données reçues, le cas échéant après soustraction d'une estimation d'interférences inter-antennes (MAI) et inter-données (ISI), pour générer une évaluation des chips émis ($\hat{x}$) après l'étalement de l'étape (B) ;
- en amont ou en aval desdits T premiers filtres, un premier soustracteur d'interférences qui utilise une estimation d'interférences MAI et ISI préalablement régénérée à partir d'informations calculées sur la base d'une évaluation ($\hat{s}$) des données modulées émises générées par un précédent filtrage ;
- des moyens de traitement (203) aptes à réaliser un traitement inverse de celui de l'étape (C) d'émission, mettant en oeuvre une réorganisation des chips évalués ($\hat{x}$) précédemment ;
- K deuxièmes filtres linéaires (205, 205') apte à traiter l'évaluation des chips émis ($\hat{x}$) ainsi obtenue, le cas échéant après soustraction d'une estimation d'interférences inter-utilisateurs (MUI), pour générer une évaluation ($\hat{s}$) des données modulées émises avant l'étalement de l'étape (B) ;
- en amont ou en aval desdits K deuxièmes filtres, un deuxième soustracteur d'interférences (204) qui utilise une estimation d'interférences MUI préalablement régénérée à partir d'informations calculées sur la base d'une évaluation ($\hat{s}$) des données modulées émises générées par un précédent filtrage ;
- des moyens de traitement générant une estimation d'interférences MAI+ISI et une estimation d'interférences MUI sur les données reçues, à partir d'informations calculées sur la base de ladite évaluation ($\hat{s}$) des données modulées émises, l'estimation d'interférences MAI+ISI et l'estimation d'interférences MUI étant alors, respectivement, envoyées récursivement au premier soustracteur (201) et au deuxième soustracteur (204) ;

ces différents éléments du système de réception étant aptes à être mis en oeuvre de façon itérative.

**Claims**

**1.** Reception method for communication over frequency-selective channels with a plurality of send antennas and a plurality of receive antennas, **characterized in that** the reception is adapted to process data received by the receive antennas that, on sending, had been successively:

(A) modulated (107) over K pathways, the number K being strictly greater than the number T of send antenna;
(B) spread (108) with a periodic spreading matrix (W) or an aperiodic spreading matrix (W$_n$) of dimensions N x K where N is strictly greater than T, over the K-dimensional vectors of the modulated data;
(C) processed so as to be transmitted from the T send antennas;

and **in that** the deception uses iteratively for this purpose:

- a first filtering by means of T linear filters (202, 202') adapted to process the received data, where applicable after subtracting (201) a multi-antenna interference (MAI) and intersymbol interference (ISI) estimate, so as to generate an evaluation of the chips ($\hat{x}$) sent after the spreading of step (B);
- before or after said first filtering, a first subtraction of interference (201) using an MAI and ISI interference estimate previously regenerated from information computed on the basis of an evaluation ($\hat{s}$) of the sent modulate dada generated by a precious filtering;

- a processing (203) that is the inverse of that of the sending step (C), using a reorganization of the chips $(\hat{x})$ evaluated previously;

- a second filtering by means of K linear filters (205, 205') adapted to process the evaluation of the chips $(\hat{x})$ sent obtained in this way, where applicable after subtracting an estimate of multi-user interference (MUI), so as to generate an evaluation (8) of the sent modulated data before the spreading of step (B) ;

- before or after said second filtering, a second subtraction of interference (204) using an MUI interference estimate previously regenerated from information computed non the basis of an evaluation $(\hat{s})$ of the sent modulated data generate by a previous filtering;

- a processing two generate an MAI+ISI interference estimate and an MUI interference estimate on the data received, based on information computed on the basis of said evaluation $(\hat{s})$ of the sent modulated data, the MAI+ISI interference estimate and the MUI interference estimate then being sent recursively to the next first subtraction (201) and the next second subtraction (204) , respectively.

2.  Reception method according to Claim 1, **characterized in that** the T first filters are derived in accordance with the criterion of minimizing the so-called unconditional mean square error, the T first filters being invariant in time for a given channel.

3.  Reception method according to either of Claims 1 and 2, **characterized in that** the T first filters are matched filters (commonly called single-user matched filters (SUMF)).

4.  Reception method according to Claim 1, **characterized in that** the T first filters are first derived in accordance with the Minimum Mean Square Error (MMSE) criterion, and then become matched filters (commonly called single-user matched filters (SUMF)) from a given iteration.

5.  Reception method according to one of Claims 1 to 4, **characterized in that** the spreading of the sending step (B) has been effected periodically, **in that** step (C) comprises chip interweaving, and **in that** the K second filters are derived in accordance with the criterion of minimizing the so-called unconditional mean square error, the K second filters being invariant in time for a given channel.

6.  Reception method according to one of Claims 1 to 4, **characterized in that** the K second filters are matches filters (commonly called single-user marched filters (SUMF)),

7.  Reception method according to one of Claims 1 to 4, **characterized in that** the spreading of the sending step (B) has been affected periodically, **in that** step (C) comprise chip interleaving, and **in that** the K second filters are first derived in accordance with the criterion of minimizing the so-called unconditional mean square error (the K second filters thus being invariant in time for a given channel) , and then become K marched filters (commonly called single-user matched filters (SUMF)) from a given iteration.

8.  Reception method according to one of the preceding claims, **characterized in that** the T first filters take account in particular of the spatial diversity of the plurality of receive antennas by maximizing the signal-to-noise ratio (SNR) after filtering (202).

9.  Reception method according to one of the receding claims, **characterized in that** the first and/or second filtering is computed using sliding windows.

10. Reception method according to one of the preceding claims, **characterized in that** the spreading of the sending step (B) has been effected aperiodically and the processing of the sending step (C) comprised a multiplexing over the T send antennas without interweaving, and **in that** said inverse processing (203) on reception then comprises a demultiplexing over N pathways.

11. Reception method according to one of Claims 1 to 9, **characterized in that** the processing of the sending step (C) comprise a multiplexing over one pathway, chip interweaving and then a demultiplexing over the T send antennas, and **in that** said inverse processing on deception then comprises a multiplexing over one pathway, chip de-interleaving, and then a demultiplexing over N pathways.

12. Reception method according to one of the preceding claims, **characterized in that**, on sending, the data had been coded before step (A), and **in that**, on reception, said processing to generate interference estimates uses:

- weighted output processing (206) processing the evaluation ($\hat{s}$) of the sent modulate data and generating modulated data bit probabilistic information usable for decoding;
- at least one decoding (209) to generate a probabilistic quantity ($\lambda$) from said probabilistic information;
- MUI interference degeneration (213, 213') to generate an MUI interference estimate on the basis of this probabilistic quantity ($\lambda$), this interference estimate then bering sent recursively to the next second subtraction step (204);
- MAI+ISI interference degeneration (216, 216') to venerate an MAI+ISI interference estimate on the basis of the probabilistic quantity ($\lambda$) and by means of processing (215) confirming to that of step (C), this interference estimate then being sent recursively to the next first subtraction step (201).

**13.** Reception method according to Claim 12 , **characterized in that** the regeneration of MAI+ISI and MUI interference generates interference estimates from an estimate ($\overline{S}$) of the sent modulated data, which estimate ($\overline{S}$) is computed (212) in the sense of the Minimum Mean Square Error (MUSE) criterion on the basis of so-called extrinsic information ($\xi$) that is a function of the bits sent previously available after decoding (209).

**14.** Reception method according to one of Claims 1 to 11, **characterized in that**, on sending, the data had been coded and interleaves before step (A) , and **in that**, on reception, said professing to generate interference estimate uses:

- weighted output processing (206) based on the evaluation of the sent modulated data ($\hat{S}$) and decoding statistic ($\Pi$) resulting from de coding (209) to generate a statistic ($\lambda$) per modulated data bit;
- de-interleaving (208) at the binary revel of extrinsic statistics ($\Xi$) found from the probabilistic quantity ($\lambda$) and generated previously;
- at least one weighted input and output decoding (209) on the basis of the data de-interleaved in this way ($\varphi$) to produce a probabilistic quantify ($\lambda$) over all of the bits;
- interleaving (211a-211b) at the binary level of extrinsic statistic ($\xi$) found from the probabilistic quantity ($\lambda$) the new statistics ($\Pi$) thus interleaved then being sent recursively to the next step (206) of weighted output professing;
- MUI interference regeneration (210, 210') to generate an MUI interference estimate on the basis of an estimate ($\overline{S}$) of the sent modulated data computed (212) in the sense of the Minimum Mean square Error (MMSE) criterion from said new interleaved statistic ($\Pi$), this MUI interference estimate then being sent recursively to the next second subtraction (204);
- MAI+ISI interference regeneration (216, 216') to generate an MAI+ISI interference estimate on the basis of the same estimate ($\overline{S}$) of the sent modulated data by means of processing (215) conforming to that of step (C), this interference estimate then bering sent recursively to the text first subtraction (201).

**15.** Reception method according to one of Claims 12 to 14, **characterized in that** said probabilistic quantity ($\lambda$) after decoding (209) is the logarithm of a ratio of modulated data a posteriori bit information probabilities.

**16.** Reception method according to the preceding claim, **characterized in that** decoding (209) computes said probabilistic quantity ($\lambda$) by means of a Viterbi algorithm with weighted inputs and outputs.

**17.** Transmission system, **characterized in that** it comprises:

- a sending system comprising a plurality of send antennas and adapted to modulate over K pathways, the number K being strictly greater than the number T of send antennas; to spread with a periodic spreading matrix (W) or an aperiodic spreading matrix ($W_n$) of dimensions N x K where N is strictly grater than T, over the K-dimensional vectors of the modulated data; and to carry out a data professing for the transmission from the T send antennas;
- a frequency-selective transmission channel;
- a reception system comprising a plurality of receive antennas and adapted to implement a deception method according to one of the preceding claims.

**18.** Reception system for communication over frequency-selective channels with a plurality of send antennas sand a plurality of receive antennas, **characterized in that** the system is adapted to process data received by the receive antennas that, on sending, had been successively:

(A) modulated over K pathways, the number K being strictly greater than the number T of send antennas;
(B) spread, in time or frequency, with a periodic spreading matrix (W) or an aperiodic spreading matrix ($W_n$) of dimensions N x K where N is strictly greater than T, over the K-dimensional vectors of the modulated data;

(C) processed so as to be transmitter from the T send antennas;

and **in that** the system comprises for this purpose:

- T first linear filters (202, 202') adapted to process the received data, where applicable after subtracting a multi-antenna interference (MAI) and intersymbol interference (ISI) estimate, so as to generate an evaluation of the chips $(\hat{x})$ sent alter the spreading of step (B);
- upstream or downstream of said T first filters, a first interference subtractor using an MAI and ISI interference estimate previously regenerated from information computed on the basis of an evaluation $(\hat{s})$ of the sent modulated data generated by a previous filtering;
- process ing means (203) adapted to execute processing that is the inverse of that of the sending step (C), using a reorganization of the chips $(\hat{x})$ evaluated previously;
- K second linear filters (205, 205') adapted to process the evacuation of the chips $(\hat{x})$ sent obtained in this way, where applicable after subtracting an estimate of multi-user interference (MUI) , so as to generate an evaluation $(\hat{s})$ of the sent modulated data before the spreading of step (B) ;
- upstream or downstream of said K second filters, a second interference subtractor (204) musing an Mar interference estimate previously regenerated from information computed on the basis of an evaluation $(\hat{s})$ of the sent modulated data generated by a previous filtering;
- processing means tea generate an MAI+ISI interference estimate and an MUI interference estimate on the data received, based on information computed on the basis of said evaluation $(\hat{s})$ of the sent modulated data, the MAI+ISI interference estimate and the MUI interference estimate then bering sent recursively to the first subtractor (201) and the second subtractor (204), respectively;

these various elements of the reception system being adapted to be used iteratively.

**Patentansprüche**

1. Empfangsverfahren für eine Kommunikation auf einem frequenzselektiven Kanal mit mehreren sendeseitigen Antennen und mehrere empfangsseitigen Antennen, **dadurch gekennzeichnet, dass** die Empfangsseite fähig ist, von den Empfangsantennen empfangende Daten zu verarbeitet, die bei ihrem Senden nacheinander:

(A) auf eine Anzahl K von Pfaden moduliert wurden (107), wobei K strikt größer als die Anzahl T von Empfangsantennen ist;
(B) mit einer periodischen (W) oder aperiodischen $(W_n)$ Verteilungsmatrix mit den Dimensionen NxK, wobei N strikt größer ist als T, auf die Sektoren der Dimension K der modulierten Daten verteilt wurde (108);
(C) verarbeitet wurden, um ausgehend von den T Sendeantennen übertragen zu werden;

und dass die Empfangsseite iterativ zu diesem Zweck verwender:

- eine erste Filterung mittels T linearer Filter (202, 202'), die fähig sind, die empfangenden Daten zu verarbeiten, ggf. nach Subtraktion (201) einer Schätzung vorn Interferenzen zwischen Antennen (MAI) und zwischen Daten (ISI), um eine Bewertung der gesendeten Chips $(\hat{x})$ nach der Verbreitung des Schritts (B) zu erzeugen;
- vor oder nach der ersten Filterung eine erste Subtraktion von Interferenzen (201), die eine Schätzung von Interferenzen MAI und ISI verwender, die vorher ausgehen vorn Informationen regeneriert wurde, die auf der Basis einer Bewertung $(\hat{s})$ der gesendeten modulierten Daten bezeichnet werden, die vorn einer vorergehenden Filterung generiert wurden,
- eine Verarbeitung (203) umgekehrt zu derjenigen des Sendeschritts (C), die eine Umordnung der vorher bewerteten Chips $(\hat{x})$ anwendet ;
- eine zweite Filterung mittels K linearer Filter (205, 205') , die fähig sind, die so erhaltene Bewertung der gesendete Chips $(\hat{x})$ zu verarbeiten, ggf. nach Subtraktion einer Schätzung von Interferenzen zwischen Benutzern (MUI), um eine Bewertung $(\hat{s})$ der modulierten Daten zu generieren, die vor der Verbreitung des Schritt (B) gesendet wurden;
- vor oder nach der zweiten Filterung eine weite Subtraktion von Interferenzen (204), die eine Interferenzschätzung MUI verwendet, die vorher aus gehend von Informationen degeneriert wurde, die auf der Basis einer Bewertung $(\hat{s})$ der gesendeten modulierten Daten berechnet werden, die von einer vorhergehenden Filterung generiert wurden;
- eine Verarbeitung, die eine Interferenzschätzung MAI+ISI und eine Interferenzschätzung MUI an den empfangenden Damen ausgehend von Informationen generiert, die auf der Basis der Bewertung ($\hat{s}$) der gesendeten modulierten Daten berechnen wurden, wobei die Interferenzschätzung MAI+ISI und die Schätzung MUI dann rekursiv an die nächste erste Subtraktion (201) bzw. an die nächste zweite Subtraktion (204) geschickt werden.

2. Empfangsverfahren nach Anspruch 1, **dadurch gekennzeichnet, dass** die T ersten Filter gemäß dem Minimierungskriterium des nicht bedingt genannten mittleren quadratischen Fehlers abgeleitet werden, wobei die T ersten Filter für einen gegebenen Kanal zeitlich invariabel sind.

3. Empfangsverfahren nach einem der Ansprüche 1 und 2, **dadurch gekennzeichnet, dass** die T ersten Filter angepasste Filter sind (gewöhnlich SUMF für "Single User Matched-Filter" genannt).

4. Empfangsverfahren nach Anspruch 1, **dadurch gekennzeichnet, dass** die T ersten Filter zuerst gemäß dem Minimierungskriterium des mittleren quadratischen Fehlers (MMSE) abgeleitet werden, dann ausgehen von einer gegebenen Iteration angepasste Filtern werden (gewöhnlich SUMPF für "Single User Matched-Filter" genannt).

5. Empfangsverfahren nach einem der Ansprüche 1 bis 4, **dadurch gekennzeichnet, dass** die Verbreitung des Schritts (B) des Sendens periodisch durchgeführt wurde, das der Schritt (C) eine chipweise Verschachtelung enthielt, und dass die K zweiten Filter gemäß dem Minimierungskriterium des nicht bedingt genannten mittleren quadratischen Fehlers abgeleitet werden, wobei die K zweien Filter für einen gegebenen Kanal zeitlich invariabel sind.

6. Empfangsverfahren nach einem der Ansprüche 1 bis 4, **dadurch gekennzeichnet, dass** die K zweiten Filter angepasste Filter sind (gewöhnlich SUMF für "Single User Matched-Filter" genannt).

7. Empfangsverfahren nach einem der Ansprüche 1 bis 4, **dadurch gekennzeichnet, dass** die Verbreitung des Schritts (B) des Sendens periodisch durchgeführt wurde, dass der Schritt (C) eine chipweise Verschachtelung enthielt, und dass die K zweien Filter zunächst gemäß dem Minimierungskriterium des nicht bedingt genannten mittleren quadratischen Fehlers abgeleitet werden (wobei die K zweiten Filter so für einen gegebenes Kanal zeitlich invariabel sind), dann ausgehen von einer gegebenen Iteration K angepasste Filter werden (gewöhnlich SUMF für "Single User Matched-Filter" genannt

8. Empfangsverfahren nach einem der vorergehenden Ansprüche, **dadurch gekennzeichnet, dass** die T ersten Filter insbesondre die Raum - Diversity der mehreren Antennen auf der Empfangsseite berücksichtigen, indem sie das Signal/Rausch-Verhältnis ("SNR") am Ausgang der Filterung maximieren (202).

9. Empfangsverfahren nach einem der vorergehenden Ansprüche, **dadurch gekennzeichnet, dass** die erste und/ oder die zweite Filterung ausgehend von gleitende Fenster berechnet wird.

10. Empfangsverfahren nach einem der vorergehenden Ansprüche, **dadurch gekennzeichnet, dass** die Verbreitung des Schritts (B) des Sendens aperiodisch durchgerührt wurde und die Verarbeitung des Schrittes (C) des Sendens eine Multiplexierung auf die T Sendeantennen ohne Verschachtelung enthielt, und dass die umgekehrte Verarbeitung (203) auf der Empfansseite dann eine Demultiplexierung auf N Pfade aufweist.

11. Empfarigsverfahren nach einem der Ansprüche 1 bis 9, **dadurch gekennzeichnet, dass** die Verarbeitung des Schritts (C) des Sendens eine Multiplexierung auf einen Pfad, eine chipweise Verschachtelung und dann eine Demultiplexierung auf die T Sendeantennen aufwies, und dass die umgekehrte Verarbeitung auf der Empfangsseite dann eine Multiplexierung auf einen Pfad, eine chipweise Entschachtelung und dann eine Demultiplexierung auf N Pfade aufweist.

12. Empfangsverfahren nach einem der vorhergehenden Ansprüche, **dadurch gekennzeichnet, dass** die Daten auf der Sendeseite vor dem Schritt (A) codiert wurden, und dass auf der Empfangsseite die Verarbeitung, die Interferenzschätzungen generiert, anwendet:

• eine Verarbeitung mit gewichtete Ausgang (206), die die Bewertung ($\hat{s}$) der gesendeten modulierten Daten verarbeitet und eine probabilistische Information über ein moduliertes Datenbit generiert, die durch eine Decodierung genutzt werden kann;
• mindestens eine Decodierung (209), die eine probabilistische Menge ($\lambda$) ausgehend von der probabilistischen Information generiert;
• eine Interferenzregenerierung MUI (213, 213'), die eine Interferenzschätzung MUI auf der Basis dieser probabilistischen Menge (λ) generiert,

wobei diese Interferenzschätzung dann rekursiv an den nächste zweiten Schritt der Subtraktion geschickt wird (204);

• eine Interferenzregenerierung MAI+ISI (216, 216'), die eine Interferenzschätzung MAI+ISI auf der Basis der probabilistischen Menge (λ) und über eine Verarbeitung gemäß (215) derjenigen des Schritts (C) generiert, wobei diese Interferenzschätzung dann rekursiv an den nächsten ernsten Schritt der Subtraktion geschickt wird (201).

**13.** Empfangsverfahren nach Anspruch 12, **dadurch gekennzeichnet, dass** die Interferenzregenerierungen MAI+ISI und MUI Interferenzschätzungen ausgehend von einem Schätzwert ($\overline{S}$) der gesendeten modulierten Daten generieren, wobei der Schätzwert ($\overline{S}$) im Sinne des Minimierungskriteriums des mittleren quadratischen Fehler (MMSE) auf der Basic einer so genannten extrinsischen Information (ξ) berechnen wird (212), die von den vorher gesendeten Bits abhängt, die am Ausgang der Decodierung zur Verfügung stehen (209).

**14.** Empfangsverfahren nach einem der Ansprüche 1 bis 11, **dadurch gekennzeichnet, dass** die Daten auf der Sendeseite vor dem Schritt (A) codiert und versehachtelt wurden und dass auf der Empfangsseite die Interferenzschätzungen generierende Verarbeitung anwendet:

• eine Verarbeitung mit gewichtetem Ausgang (206) ausgehen von der Bewertung der gesendeten modulierten Daten ($\hat{S}$) und von Decodierstatistiken (Π), die von einer Decodierung stammen (209), die eine Statistik (Λ) pro moduliertes Datenbit generiert;
• eine Entschachtelung (208) auf der Binärebene von vorher generierten extrinsischen Statistiken (Ξ) die ausgehend von der probabilistischen Menge (λ) gesunden wenden;
• mindestens eine Decodierung (209) mit gewichtetem Eingang und Ausgang, ausgehen von den so entschachtelten Daten (φ), und die eine probabilistische Menge (λ) über die Gesamtheit der Bits erzeugt;
• eine Verschachtelung (211a-211b) auf der Binärebene von extrinsischen Statistiken (ξ), die ausgehend von der probabilistischen Menge (λ) gesunden werden, so verschachtelt neue Statistiken (Π), die anschließend rekursiv an den folgenden Schritt der Verarbeitung mit gewichtetem Ausgang geschickt werden (206);
• ein Interferenzregenerierung MUI (210, 210'), die eine Interferenzschätzung MUI auf der Basis eines Schätzwerts ($\overline{S}$) der gesendeten modulierten Daten generiert, die im Sinne des Minimierungskriteriums des mittleren quadratische Fehlers (MMSE) ausgehend von den neuen verschachtelten Statistiken (Π) berechnet wurden (212), wobei diese Interferenzschätzung MUI dann rekursiv an die nächste zweite Subtraktion (204) geschickt wird;
• eine Interferenzregenerierung MAI+ISI (216, 216'), die eine Interferenaschätzung MAI+ISI auf der Basis des gleichen Schätzwerts ($\overline{S}$) der gesendeten modulierten Daten mittels einer Verarbeitung (215) gleich derjenigen des Schritts (C) generiert, wobei diese Interferenzschätzung dann rekursiv an die nächste erste Subtraktion geschickt wird (201).

**15.** Empfangsverfahren nach einem der Ansprüche 12 bis 14, **dadurch gekennzeichnet, dass** die probabilistische Menge (λ) am Decodierausgang (209) der Logarithmus eines Verhältnisses von Wahrscheinlichkeiten von A-posteriori-Bitinformationen von modulierten Daten ist.

**16.** Empfangsverfahren nach dem vorhergehenden Anspruch, **dadurch gekennzeichnet**, das die Decodierung (209) die probabilistische Menge (λ) mittels eines Viterbi-Algorithmus mit gewichtetem Eingang und Ausgang berechnet.

**17.** Übertragungssystem, **dadurch gekennzeichnet, dass** es aufweist:

- ein Sendesystem, das mehrere Sendeantennen aufweist und fähig ist, über eine Anzahl K von Pfaden zu modulieren, wobei K strikt größer als die Anzahl T von Sendeantennen ist; mit einer periodischen (W) oder aperiodischen ($W_n$) Verbreitungsmatrix mit den Dimensionen NxK, wobei N strikt größer ist als T, über die vektoren der Dimension K modulierte Daten zu verbreiten; und eine Datenverarbeitung für die Übertragung ausgehend von den T Sendeantennen durchzuführen;
- einen frequenzselektiven Übertragungskanal;
- ein Empfangssystem, das mehrere Empfangsantennen aufweist und fähig ist, ein Empfangsverfahren nach einem der vorhergehenden Ansprüche abzuwenden.

**18.** Empfangssystem für eine Kommunkation über einen frequenzselektiven Kanal mit mehreren Antennen auf der Sendeseite und mehreren Antennen auf der Empfangsseite, **dadurch gekennzeichnet, dass** das System fähig ist, von den Empfangsantennen empfangene Daten zu verarbeiten, die blei ihrem Senden nacheinander:

(A) über eine Anzahl K von Pfaden moduliert wurden, wobei K strikt größer ist als die Anzahl T von Sendeantennen;

(B) mit einer periodische (W) oder aperiodischen ($W_n$) Verbreitungsmatrix der Dimensionen NxK, wobei N strikt größer ist als T, frequenz- oder zeitmäßig auf die Vektoren der Dimension K der modulierten Daten verbreitert wurden;

(C) verarbeitet wurde, um ausgehend von den T Sendeantennen übertragen zu werden;

und dass das System zu diesem Zweck aufweist:

- T erste lineare Filter (202, 202'), die fähig sind, die empfangenen Daten zu verarbeiten, ggf. nach Subtraktion einer Schätzung von Interferenzen zwischen Antennen (MAI) und zwischen Daten (ISI), um eine Bewertung der gesendete Chips ($\hat{x}$) nach der Verbreitung des Schritts (B) zu generierten;

- vor oder hinter den T ersten Filtern einen ersten Interferenz-Subtrahierer, der eine Interferenzschätzung MAI und ISI verwendet, die vorher ausgehend von Informationen regeneriert wurde, die auf der Basis einer Bewertung ($\hat{s}$) der gesendeten modulierten Daten berechnet werden, die von einer vorhergehenden Filterung generiert wurden;

- Verarbeitungsmittel (203), die fähig sind, eine umgekehrte Verarbeitung zu derjenigen des Sendeschritts (C) durchzuführen, die eine Umordnung der vorher bewerteten Chips ($\hat{x}$) anwendet;

- K zweite lineare Filter (205, 205'), die fähig sind, die so erhaltene Bewertung der gesendeten Chips ($\hat{x}$) zu vorarbeiten, ggf. nach Subtraktion einer Schätzung von Interferenzen zwischen Benutzern (MUI), um eine Bewertung ($\hat{s}$) der modulieren Daten zu generieren, die vor der Verbreitung des Schritts (B) gesendet wurden;

- vor oder nach den K zweiten Filtern einen zweiten Interferenz-Subtrahierer (204), der eine Interferenzschätzung MUI verwendet, die vorher ausgehen von Informationen degeneriert wurde, die auf der Basis einer Bewertung ($\hat{s}$) der gesendeten modulierten Daten berechnen werden, die von einer vohergehenden Filterung generiert wurden;

- Verarbeitungsmittel, die eine Interferenzschätzung MAI+ISI und eine Interferenzschätzung MUI an den empfangenen Daten ausgehend von Informationen generieren, die auf der Basis der Bewertung ($\hat{s}$) der gesendeten modulierten Daten berechnet wurden, wobei die Interferenzschätzung MAI+ISI und die Schätzung MUI dann rekursiv an den erster Subtrahierer (201) bzw. an den zweiten Subtrahierer (204) geschickt werden;

wobei diese verschiedenen Elemente des Empfangssystems fähig sind, iterativ eingesetzt zu werden.

Figure 1

Figure 2

Figure 3

Figure 4

Figure 5

Figure 6

Figure 7

Figure 8

Figure 9

Figure 10

Figure 11a

Figure 11b

$$\hat{x}=f\left(y-b_1\bar{x}\right)=f'y-b_1'\bar{x}\Rightarrow f'=f\,;b_1'=fb_1$$

Figure 12a

Figure 12b

$$\hat{s}=g\left(\hat{z}-b_2\bar{s}\right)=g'\hat{z}-b_2'\bar{s}\Rightarrow g'=g\,;b_2'=gb_2$$

Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.M. CHAN ; G.W. WORNELL.** A New Class of Efficient Block-Iterative Interference Cancellation Techniques for Digital Communication Receivers. *IEEE J. VLSI Signal Processing (Special Issue on Signal Processing for Wireless Communication Systems,* Janvier 2002, vol. 30, 197-215

- **W. WANG ; V.H. POOR.** Iterative (Turbo) Soft Interference Cancellation and Decoding for Coded CDMA. *IEEE Trans. Commun.,* Septembre 1999, vol. COM-47 (9), 2356-2374
- **M. LENARDI ; D.T. SLOCK.** A Rake Receiver with Intracell Interference Cancellation for DS-CDMA synchronous Downlink with Orthogonal Codes. *IEEE VTC,* 2000, 430-434